(19) Europäisches Patentamt
European Patent Office
Office européen des brevets

(11) EP 3 307 804 B1

(12) # EUROPÄISCHE PATENTSCHRIFT

(45) Veröffentlichungstag und Bekanntmachung des Hinweises auf die Patenterteilung:
**15.05.2019 Patentblatt 2019/20**

(21) Anmeldenummer: **16727448.9**

(22) Anmeldetag: **01.06.2016**

(51) Int Cl.:
***C08G 18/71** (2006.01)* ***C08G 18/77** (2006.01)*
***C08G 18/80** (2006.01)* ***C08G 18/18** (2006.01)*
***C09D 175/04** (2006.01)*

(86) Internationale Anmeldenummer:
**PCT/EP2016/062368**

(87) Internationale Veröffentlichungsnummer:
**WO 2016/202588 (22.12.2016 Gazette 2016/51)**

(54) **POLYURETHAN-BESCHICHTUNGSMITTELZUSAMMENSETZUNGEN SOWIE DEREN VERWENDUNG ZUR HERSTELLUNG VON MEHRSCHICHTLACKIERUNGEN**

POLYURETHANE COATING AGENTS AND THEIR USE IN THE PRODUCTION OF MULTILAYER COATINGS

COMPOSITIONS DE PRODUIT DE REVETEMENT A BASE DE POLYURETHANE ET LEURS UTILISATIONS DESTINEES A FABRIQUER DES PEINTURES MULTICOUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2015 EP 15172102**

(43) Veröffentlichungstag der Anmeldung:
**18.04.2018 Patentblatt 2018/16**

(73) Patentinhaber: **BASF Coatings GmbH**
**48165 Münster (DE)**

(72) Erfinder:
- **WEGNER, Jens**
**48329 Havixbeck (DE)**
- **MÜLLER, Jörg**
**59075 Hamm (DE)**
- **AUSTRUP, Berthold**
**59394 Nordkirchen (DE)**

(74) Vertreter: **BASF IP Association**
**BASF SE**
**G-FLP-C006**
**67056 Ludwigshafen (DE)**

(56) Entgegenhaltungen:
**WO-A1-2014/016019 WO-A1-2014/016026**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Beschichtungsmittelzusammensetzungen enthaltend mindestens eine Polyhydroxylgruppenhaltige Komponente (A), mindestens eine Komponente (B) mit im Mittel mindestens einer Isocyanatgruppe und mit im Mittel mindestens einer hydrolysierbaren Silangruppe, mindestens einen phosphor- und stickstoffhaltigen Katalysator (D) für die Vernetzung von Silangruppen und mindestens einen Katalysator (Z) für die Reaktion der Hydroxylgruppen mit den Isocyanatgruppen. Sie betrifft auch ein Verfahren zur Herstellung von Mehrschichtlackierungen unter Verwendung dieser Beschichtungsmittelzusammensetzungen sowie die mit Hilfe dieses Verfahrens herstellbaren Mehrschichtlackierungen.

## Stand der Technik

Beschichtungsmittelzusammensetzungen auf der Basis von Polyurethanen sowie deren Verwendung als oberste Klarlackschicht von Mehrschichtlackierungen sind seit langem bekannt. Ebenso ist es bekannt, dass durch die Verwendung von Polyisocyanatvernetzern, die zusätzlich hydrolysierbare Silangruppen aufweisen, die Kratzfestigkeit der resultierenden Mehrschichtlackierungen wesentlich verbessert werden kann. Insbesondere wenn die Beschichtungen bei niedrigeren Temperaturen von maximal 90°C, wie sie für die Autoreparaturlackierung sowie die Beschichtung von Automobilanbauteilen und Nutzfahrzeugen üblich sind, gehärtet werden, ist die gleichzeitige Vernetzung über die Silangruppen und die OH/NCO-Reaktion ein sehr wichtiger Aspekt.

So sind beispielsweise in der WO09/077180 Beschichtungsmittelzusammensetzungen beschrieben, die Polyisocyanatvernetzer mit zusätzlichen hydrolysierbaren Silangruppen und als Katalysator insbesondere mit 1,4-Diazabicyclo(2.2.2.)octan (DABCO) blockierten Phosphorsäure-bis(2-ethylhexyl)ester enthalten und die insbesondere für Beschichtungen, die bei niedrigen Temperaturen, insbesondere von 30 bis 90 °C, gehärtet werden, eingesetzt werden.

Die WO09/077182 beschreibt Beschichtungsmittelzusammensetzungen, die Polyisocyanatvernetzer mit zusätzlichen hydrolysierbaren Silangruppen und als Katalysator mit Triethylamin blockierten Phosphorsäure-bis(2-ethylhexyl)ester sowie als weiteren Katalysator Amine, insbesondere bicyclische Amine, wie beispielsweise 1,8-Diazabicyclo(5.4.0)undec-7-en (DBU) oder 1,5-Diazabicyclo(4.3.0)non-5-en (DBN), enthalten.

Verbesserungsbedürftig ist beiden Beschichtungsmitteln jedoch weiterhin die Aushärtung der Beschichtungsmittel bei den niedrigen Einbrenntemperaturen von maximal 100°C.

Ferner beschreibt die WO2014/016026 Beschichtungsmittelzusammensetzungen, die Polyisocyanatvernetzer mit zusätzlichen hydrolysierbaren Silangruppen und als Katalysator mit 1,4-Diazabicyclo(2.2.2.)octan (DABCO) blockierten Phosphorsäure-bis(2-ethylhexyl)ester sowie als weiteren Katalysator eine monomere aromatische, ggf. substituierte, Carbonsäure (S), deren Carboxylgruppe in Konjugation zu einem $\pi$-Elektronensystem steht, insbesondere Benzoesäure, enthalten. Verbesserungsbedürftig ist bei diesen Beschichtungsmitteln die Chemikalienbeständigkeit, insbesondere die Beständigkeit gegenüber Natronlauge, sowie Härte der Beschichtungen direkt nach der Härtung. Wünschenswert ist außerdem eine Erniedrigung der Onset-Temperatur.

Die WO2014/077180 beschreibt schließlich Beschichtungsmittelzusammensetzungen auf der Basis silanisierter Isocyanatvernetzer, die als Katalysator Zinkamidinkomplexe und als weitere Komponente mindestens eine aromatische Monocarbonsäure, insbesondere Benzoesäure, enthalten. Nachteilig bei diesen Beschichtungsmitteln ist jedoch die Vergilbungsneigung der verwendeten Katalysatoren, insbesondere bei erhöhten Temperaturen von 60 bis 100 °C.

## Aufgabe

Der vorliegenden Erfindung lag daher die Aufgabe zugrunde, die zuvor beschriebenen Nachteile des Standes der Technik zu beseitigen. Es sollten daher Beschichtungsmittelzusammensetzungen der eingangs genannten Art zur Verfügung gestellt werden, die direkt nach der Härtung bei Temperaturen von maximal 100 °C, insbesondere von maximal 90 °C, eine gute Verpackungsfestigkeit und eine gute Montagefestigkeit der resultierenden Beschichtungen aufweisen. Wünschenswert ist daher eine möglichst niedrige Onset-Temperatur, also eine möglichst niedrige Temperatur, bei der die Vernetzung beginnt.

Außerdem sollten die Beschichtungsmittelzusammensetzungen auch bei Härtung bei Temperaturen von maximal 100 °C, insbesondere von maximal 90 °C, sowohl gute Härten und Kratzfestigkeiten der resultierenden Beschichtung als auch gleichzeitig eine gute Chemikalienbeständigkeit der resultierenden Beschichtung gewährleisten.

Ferner sollten die Beschichtungsmittelzusammensetzungen zu Beschichtungen mit einer möglichst geringen Thermovergilbung, insbesondere bei den im Bereich der OEM-Lackierung üblichen Tests, wie beispielsweise dem BMW-Test, also der Lagerung für 7 Tage bei 100°C, führen. Außerdem sollten sie auch die üblicherweise im Bereich der Lackierung von Nutzfahrzeugen und Automobilanbauteilen geforderten Eigenschaften erfüllen.

Schließlich sollten die in dem Verfahren eingesetzten Beschichtungsmittelzusammensetzungen einfach und sehr gut reproduzierbar herstellbar sein und während der Lackapplikation keine ökologischen Probleme bereiten.

**Lösung der Aufgabe**

Demgemäß wurden Beschichtungsmittelzusammensetzungen gefunden, enthaltend

a) mindestens eine Polyhydroxylgruppenhaltige Komponente (A),
b) mindestens eine eine Komponente (B) mit im Mittel mindestens einer Isocyanatgruppe und mit im Mittel mindestens einer hydrolysierbaren Silangruppe der Formel (I)

-NR-(X-SiR"x(OR')3-x) (I),

und/oder
mindestens einer hydrolysierbaren Silangruppe der Formel (II)

-N(X-SiR"x(OR')3-x)n(X'-SiR"y(OR')3-y)m (III),

wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

n = 0 bis 2, m = 0 bis 2, m+n = 2 sowie x, y = 0 bis 2 ist,
c) mindestens einen phosphor- und stickstoff-haltigen Katalysator (D) für die Vernetzung von Silangruppen und
d) mindestens einen Katalysator (Z) für die Reaktion der Hydroxylgruppen mit den Isocyanatgruppen,

dadurch gekennzeichnet, dass

i. der Katalysator (Z) ausgewählt ist aus der Gruppe der Zink- und Wismutcarboxylate, der Aluminium-, Zirkonium-, Titan- und/oder Bor-Chelate und/oder der anorganischen Zinn-enthaltenden Katalysatoren sowie deren Mischungen und
ii. die Beschichtungsmittelzusammensetzung mindestens einen Reaktionsbeschleuniger (R) enthält, der ausgewählt ist aus der Gruppe der anorganischen Säuren und/oder der organischen Säuren und/oder der Teilester der anorganischen Säuren und/oder der Teilester der organischen Säuren.

Gegenstand der vorliegenden Erfindung sind außerdem Verfahren zur Herstellung von Mehrschichtlackierungen unter Verwendung der Beschichtungsmittelzusammensetzungen sowie die nach diesem Verfahren erhältlichen Beschichtungen sowie deren Verwendung. Bevorzugte Ausführungsformen gehen aus der folgenden Beschreibung und den Unteransprüchen hervor.

Es ist überraschend und war nicht vorhersehbar, dass die mit den erfindungsgemäßen Beschichtungsmittelzusammensetzungen hergestellten Beschichtungen direkt nach der Härtung bei Temperaturen von maximal 100 °C, insbesondere von maximal 90 °C, eine gute Verpackungsfestigkeit und eine gute Montagefestigkeit aufweisen. Die erfindungsgemäßen Beschichtungsmittelzusammensetzungen zeichnen sich ferner durch eine niedrige Onset-Temperatur, also durch eine niedrige Temperatur, bei der die Vernetzung beginnt, aus.

Außerdem führen die Beschichtungsmittelzusammensetzungen auch bei Härtung bei Temperaturen von maximal 100 °C, insbesondere von maximal 90 °C, zu Beschichtungen mit sowohl guter Härte und Kratzfestigkeit als auch gleichzeitig guter Chemikalienbeständigkeit.

Ferner führen die Beschichtungsmittelzusammensetzungen zu Beschichtungen mit einer möglichst geringen Thermovergilbung, insbesondere bei den im Bereich der OEM-Lackierung üblichen Tests, wie beispielsweise dem BMW-Test, also der Lagerung für 7 Tage bei 100°C. Außerdem erfüllen sie auch die üblicherweise im Bereich der Lackierung von Nutzfahrzeugen und Automobilanbauteilen geforderten Eigenschaften.

Schließlich sind die Beschichtungsmittelzusammensetzungen einfach und sehr gut reproduzierbar herstellbar und bereiten während der Lackapplikation keine ökologischen Probleme.

**Beschreibung der Erfindung**

**Die erfindungsgemäß eingesetzten Beschichtungsmittel**

Im Rahmen der vorliegenden Erfindung wurden zur Bestimmung von nicht-flüchtigen Anteilen (nfA, auch Festkörpergehalt oder Bindemittelgehalt genannt) jeweils konstante Bedingungen gewählt, sofern nichts anderes angegeben wurde.

Zur Bestimmung des nicht-flüchtigen Anteils der einzelnen Komponenten (A) bzw. (B) bzw. (C) bzw. (E) des Beschichtungsmittels wird eine Menge von 1 g der jeweiligen Probe der jeweiligen Komponente (A) bzw. (B) bzw. (C) bzw. (E) auf einen Festkörperdeckel aufgebracht und für 1 h bei 130°C erhitzt, auf Raumtemperatur abgekühlt und dann zurückgewogen (in Anlehnung an ISO 3251). Der Bindemittelgehalt der Komponente in Gew.-% ergibt sich dann entsprechend aus 100 multipliziert mit dem Quotient aus dem Gewicht des Rückstandes der jeweiligen Probe nach Trocknung bei 130°C geteilt durch das Gewicht der jeweiligen Probe vor der Trocknung. Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungszusammensetzung einstellen und bestimmen zu können. Im Falle von handelsüblichen Komponenten kann der Bindemittelgehalt dieser Komponente auch hinreichend genau gleich dem angegebenen Festkörpergehalt gesetzt werden, sofern nichts anderes angegeben ist.

Unter Bindemittelgehalt der Beschichtungsmittelzusammensetzung ist jeweils der Gesamtbindemittelgehalt der Komponenten (A) plus (B) plus (C) plus (E) der Beschichtungsmittelzusammensetzung vor der Vernetzung zu verstehen. Er wird in dem Fachmann bekannter Weise aus dem Bindemittelanteil dieser Komponenten (A) bzw. (B) bzw. (C) bzw. (E) und der jeweils in 100 Gewichtsteilen der Beschichtungsmittelzusammensetzung eingesetzten Menge der jeweiligen Komponente (A) bzw. (B) bzw. (C) bzw. (E) berechnet: Der Bindemittelgehalt der Beschichtungsmittelzusammensetzung in Gewichtsteilen ist also gleich der Summe der Produkte aus der jeweils in 100 Gewichtsteilen der Beschichtungsmittelzusammensetzung eingesetzten Menge der jeweiligen Komponente (A) bzw. (B) bzw. (C) bzw. (E) jeweils multipliziert mit dem Bindemittelgehalt der jeweiligen Komponente (A) bzw. (B) bzw. (C) bzw. (E) in Gew.-% und jeweils dividiert durch 100.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2: 2007-11 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114: 2006-11 experimentell durch Titration bestimmt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungs-indexdetektor bestimmt. Als Elutionsmittel wurde Tetrahydrofuran enthaltend 0.1 Vol.-% Essigsäure mit einer Elutionsgeschwindigkeit von 1 ml/min verwendet. Die Kalibrierung wird mittels Polystyrol-Standards durchgeführt.

Die Glasübergangstemperatur Tg wird im Rahmen der Erfindung experimentell in Anlehnung an DIN 51005 "Thermische Analyse (TA) - Begriffe" und DIN EN ISO 11357-2 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN EN ISO 11357-2, Punkt 10.1.2, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

**Die polyhydroxylgruppenhaltige Komponente (A)**

Als polyhydroxylgruppenhaltige Komponente (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen zahlenmittlere Molekulargewichte Mn >= 300 g/mol, bevorzugt Mn = 400 - 30.000 g/mol, besonders bevorzugt Mn = 500 - 15.000 g/mol, und massenmittlere Molekulargewichte Mw > 500 g/mol, bevorzugt zwischen 800 und 100.000 g/mol, insbesondere zwischen 900 und 50.000 g/mol, gemessen mittels Gelpermeationschromatographie (GPC) gegen einen Polystyrolstandard auf.

Bevorzugt sind als Komponente (A) Polyesterpolyole, Polyacrylatpolyole und/oder Polymethacrylatpolyole sowie deren Mischpolymerisate - im folgenden Polyacrylatpolyole genannt -, Polyurethanpolyole, Polysiloxanpolyole und Mischungen dieser Polyole.

Die Polyole (A) weisen bevorzugt eine OH-Zahl von 30 bis 400 mg KOH/g, insbesondere zwischen 70 und 250 mg KOH/g, auf. Im Falle der Poly-(Meth)-Acrylat-Copolymerisate kann die OH-Zahl auch durch Berechnung auf Basis der eingesetzten OH-funktionellen Monomere ausreichend genau bestimmt werden.

Die Polyole (A) weisen bevorzugt eine Säurezahl zwischen 0 und 30 mg KOH/g auf.

Die Glasübergangstemperaturen der Polyole liegen bevorzugt zwischen - 150 und 100 °C, besonders bevorzugt zwischen -40°C und 60°C, jeweils gemessen mittels dynamischer Differenzkalorimetrie (DDK) nach DIN 53765.

Polyurethanpolyole werden vorzugsweise durch Umsetzung von oligomeren Polyolen, insbesondere von Polyesterpolyol-Präpolymeren, mit geeigneten Di- oder Polyisocyanaten hergestellt und sind beispielsweise in EP-A-1 273 640 beschrieben. Insbesondere werden Umsetzungsprodukte von Polyesterpolyolen mit aliphatischen und/oder cycloaliphatischen Di- und/oder Polyisocyanaten eingesetzt.

Die erfindungsgemäß bevorzugt eingesetzten Polyurethanpolyole weisen ein zahlenmittleres Molekulargewicht Mn >= 300 g/mol, bevorzugt Mn = 700 - 2.000 g/mol, besonders bevorzugt Mn = 700 - 1.300 g/mol, sowie vorzugsweise ein massenmittleres Molekulargewicht Mw > 500 g/mol, bevorzugt zwischen 1.500 und 3.000 g/mol, insbesondere zwischen 1.500 und 2.700 g/mol auf, jeweils gemessen mittels Gelpermeationschromatographie (GPC) gegen einen Polystyrolstandard.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Als polyhydroxylgruppenhaltige Komponente (A) werden besonders bevorzugt Polyesterpolyole, Polyacrylatpolyole, Polymethacrylatpolyole, Polyurethanpolyole oder deren Mischungen und ganz besonders bevorzugt Mischungen von Poly(meth)acrylatpolyolen eingesetzt.

Die erfindungsgemäß bevorzugt eingesetzten Polyesterpolyole (A) weisen ein zahlenmittleres Molekulargewicht Mn >= 300 g/mol, bevorzugt Mn = 400 - 10.000 g/mol, besonders bevorzugt Mn = 500 - 5.000 g/mol, sowie vorzugsweise ein massenmittleres Molekulargewicht Mw > 500 g/mol, bevorzugt zwischen 800 und 50.000 g/mol, insbesondere zwischen 900 und 10.000 g/mol auf, jeweils gemessen mittels Gelpermeationschromatographie (GPC) gegen einen Polystyrolstandard.

Die erfindungsgemäß bevorzugt eingesetzten Polyesterpolyole (A) weisen bevorzugt eine OH-Zahl von 30 bis 400 mg KOH/g, insbesondere zwischen 100 und 250 mg KOH/g, auf.

Die erfindungsgemäß bevorzugt eingesetzten Polyesterpolyole (A) weisen bevorzugt eine Säurezahl zwischen 0 und 30 mg KOH/g auf.

Geeignete Polyesterpolyole sind beispielsweise auch in EP-A-0 994 117 und EP-A-1 273 640 beschrieben.

Die erfindungsgemäß bevorzugt eingesetzten Poly(meth)acrylatpolyole (A) sind in der Regel Copolymerisate und weisen vorzugsweise ein zahlenmittleres Molekulargewicht Mn >= 300 g/mol, bevorzugt Mn = 500 - 15.000 g/mol, besonders bevorzugt Mn = 900 - 10.000 g/mol, sowie vorzugsweise massenmittlere Molekulargewichte Mw zwischen 500 und 20.000 g/mol, insbesondere zwischen 1.000 und 15.000 g/mol auf, jeweils gemessen mittels Gelpermeationschromatographie (GPC) gegen einen Polystyrolstandard.

Die Poly(meth)acrylatpolyole (A) weisen bevorzugt eine OH-Zahl von 60 bis 300 mg KOH/g, insbesondere zwischen 70 und 250 mg KOH/g, sowie eine Säurezahl zwischen 0 und 30 mg KOH/g auf.

Die Hydroxylzahl (OH-Zahl) und die Säurezahl werden wie oben beschrieben bestimmt (DIN 53240-2 bzw. DIN EN ISO 2114).

Für die erfindungsgemäß bevorzugt eingesetzten Poly(meth)acrylatpolyole (A) geeignete Monomerbausteine sind beispielsweise in der WO2014/016019 auf den Seiten 10 und 11 sowie der WO2014/016026 auf den Seiten 11 und 12 genannt.

Insbesondere werden erfindungsgemäß Beschichtungsmittelzusammensetzungen (K) eingesetzt, die als Komponente (A) ein oder mehrere Poly(meth)acrylatpolyole (A1) mit einer Glasübergangstemperatur zwischen -100 und < 30 °C, bevorzugt unter 10°C, insbesondere zwischen - 60 °C bis + 5 °C und besonders bevorzugt zwischen - 30 °C und

< 0 °C (gemessen mittels dynamischer Differenzkalorimetrie (DDK) nach DIN 53765), enthalten. Zusätzlich können die Beschichtungsmittelzusammensetzungen (K) noch ein oder mehrere, hiervon verschiedene Poly(meth)-acrylatpolyole (A2) enthalten, vorzugsweise solche Poly(meth)acrylatpolyole (A2), die eine Glasübergangstemperatur von 10 bis 50°C (gemessen mittels dynamischer Differenzkalorimetrie (DDK) nach DIN 53765) enthalten.
Die Glasübergangstemperatur kann vom Fachmann zunächst auch theoretisch mit Hilfe der nachfolgend aufgeführten Fox-Gleichung (III) abgeschätzt werden, ist aber dann wie oben beschrieben experimentell zu bestimmen:

$$1/T_g = \sum_{n=1}^{n=x} W_n/T_{gn} \qquad (III)$$

wobei
$T_g$ = Glasübergangstemperatur des Polyacrylates bzw. des Polymethacrylates, x= Anzahl der verschiedenen einpolymerisierten Monomeren, $W_n$ = Gewichtsanteil des n-ten Monomers $T_{gn}$ = Glasübergangstemperatur des Homopolymers aus dem n-ten Monomer.

Bevorzugt enthält die Komponente (A) mindestens ein (Meth)Acrylatcopolymerisat, das erhältlich ist, indem

(a) 10 bis 80 Gew.- %, bevorzugt 20 bis 50 Gew.- %, eines hydroxylgruppenhaltigen Esters der Acrylsäure oder Mischungen dieser Monomeren,
(b) 0 bis 30 Gew.- %, bevorzugt 0 bis 15 Gew.- % eines von (a) verschiedenen hydroxylgruppenhaltigen Esters der Methacrylsäure oder eines Gemisches aus solchen Monomeren,
(c) 5 bis 90 Gew.- %, bevorzugt 20 bis 70 Gew.- %, eines von (a) und (b) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d) 0 bis 5 Gew.- %, bevorzugt 0,5 bis 3,5 Gew.- %, einer ethylenisch ungesättigten Carbonsäure oder einer Mischung aus ethylenisch ungesättigten Carbonsäuren,
(e) 0 bis 50 Gew.- %, bevorzugt 0 bis 20 Gew.- %, eines Vinylaromaten oder eines Gemisches aus solchen Monomeren und
(f) 0 bis 50 Gew.- %, bevorzugt 0 bis 35 Gew.- %, eines von (a), (b), (c), (d) und (e) verschiedenen ethylenisch ungesättigten Monomeren oder eines Gemisches aus solchen Monomeren

copolymerisiert werden, wobei die Summe der Gewichtsanteile der Komponenten (a), (b), (c), (d), (e) und (f) stets 100 Gew.-% ergibt,
sowie
ggf. ein oder mehrere, hiervon verschiedene (Meth)Acrylatcopolymerisate.

**Die Komponente (B)**

Die erfindungsgemäßen Beschichtungsmittel enthalten eine Komponente (B) mit im Mittel mindestens einer Isocyanatgruppe und mit im Mittel mindestens einer hydrolysierbaren Silangruppe. Bevorzugt enthalten die erfindungsgemäßen Beschichtungsmittel eine Komponente (B) mit im Mittel mindestens einer freien Isocyanatgruppe.

Die als Grundkörper für die erfindungsgemäß bevorzugt eingesetzte Komponente (B) dienenden Di- und/oder Polyisocyanate sind bevorzugt an sich bekannte substituierte oder unsubstituierte aromatische, aliphatische, cycloaliphatische und/oder heterocyclische Polyisocyanate, besonders bevorzugt aliphatische und/oder cycloaliphatische Polyisocyanate. Weiterhin bevorzugt sind die durch Dimerisierung, Trimerisierung, Biuret-, Uretdion-, Allophanat- und/oder Isocyanurat-Bildung von einem solchen aliphatischen und/oder cycloaliphatischen Diisocyanat abgeleiteten Polyisocyanatgrundkörper.

Die als Grundkörper für die erfindungsgemäß bevorzugt eingesetzte Komponente (B) dienenden Di- und/oder Polyisocyanate sind beispielsweise in der WO2014/016019 auf den Seiten 12 und 13 sowie der WO2014/016026 auf den Seiten 13 und 14 beschrieben.

Besonders bevorzugt als Grundkörper für die erfindungsgemäß bevorzugt eingesetzte Komponente (B) dienende Di- und/oder Polyisocyanate sind Hexamethylen-1,6-diisocyanat, Isophorondiisocyanat und 4,4'-Methylendicyclohexyldiisocyanat, oder Mischungen dieser Isocyanate und/oder ein oder mehrere durch Dimerisierung, Trimerisierung, Biuret-, Uretdion-, Allophanat- und/oder Isocyanurat-Bildung von einem solchen Isocyanat abgeleiteter Polyisocyanatgrundkörper. Insbesondere ist der Polyisocyanatgrundkörper 1,6-Hexamethylendiisocyanat, 1,6-Hexamethylendiisocyanatisocyanurat, 1,6-Hexamethylendiisocyanaturetdion, Isophorondiisocyanat, Isophorondiisocyanatisocyanurat oder eine Mischung aus zwei oder mehreren dieser Polyisocyanate, besonders bevorzugt 1,6-Hexamethylendiisocyanatisocyanurat.

In einer weiteren Ausführungsform der Erfindung sind die als Grundkörper für die erfindungsgemäß bevorzugt eingesetzte Komponente (B) dienenden Di- und/oder Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Die Komponente (B) enthält im Mittel mindestens eine Isocyanatgruppe sowie zusätzlich im Mittel mindestens eine Struktureinheit (I) der Formel (I)

$$-NR-(X-SiR''_x(OR')_{3-x}) \qquad (I)$$

und/oder

mindestens eine Struktureinheit (II) der Formel (II)

$$-N(X-SiR''_x(OR')_{3-x})_n(X'-SiR''_y(OR')_{3-y})_m \qquad (II),$$

wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,

R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,

X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,

R'' = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R'' = Alkylrest, insbesondere mit 1 bis 6 C-Atomen,

n = 0 bis 2, m = 0 bis 2, m+n = 2 sowie x, y = 0 bis 2 ist.

Bevorzugt enthält die Komponente (B) im Mittel mindestens eine Isocyanatgruppe sowie zusätzlich im Mittel mindestens eine Struktureinheit (I) der Formel (I) und im Mittel mindestens eine Struktureinheit (II) der Formel (II).

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die bevorzugt eingesetzte Komponente (B) besteht dabei in der Regel aus einer Mischung verschiedener Verbindungen und weist nur im Mittel mindestens eine Struktureinheit (I) der Formel (I) und/oder mindestens eine Struktureinheit (II) der Formel (II) und im Mittel mindestens eine, bevorzugt mehr als eine, Isocyanatgruppe auf. Ganz besonders bevorzugt weist die Komponente (B) Mittel mindestens eine Struktureinheit (I) der Formel (I) und mindestens eine Struktureinheit (II) der Formel (II) und im Mittel mehr als eine Isocyanatgruppe auf.

Insbesondere besteht die Komponente (B) aus einer Mischung mindestens einer Verbindung (B1), die mehr als eine Isocyanatgruppe und keine Struktureinheiten (I) und (II) aufweist, mit mindestens einer Verbindung (B2), die mindestens eine Isocyanatgruppe und mindestens eine Struktureinheit (I) aufweist, und mindestens einer Verbindung (B3), die mindestens eine Isocyanatgruppe und mindestens eine Struktureinheit (II) aufweist, und/oder mit mindestens einer Verbindung (B4), die mindestens eine Struktureinheit (I) und mindestens eine Struktureinheit (II) aufweist, und/oder mit mindestens einer Verbindung (B5), die mindestens eine Isocyanatgruppe und mindestens eine Struktureinheit (I) und mindestens eine Struktureinheit (II) aufweist.

Die erfindungsgemäß bevorzugt eingesetzte, mit den Struktureinheiten (I) und/oder (II) funktionalisierte Komponente (B) wird insbesondere durch Umsetzung von - bevorzugt aliphatischen - Di- und/oder Polyisocyanaten bzw.

deren durch Trimerisierung, Dimerisierung, Urethan-, Biuret-, Uretdion- und/oder Allophanatbildung abgeleiteten Polyisocyanaten mit mindestens einer Verbindung der Formel (Ia)

$$H\text{-}NR\text{-}(X\text{-}SiR''_x(OR')_{3\text{-}x}) \qquad (Ia),$$

und/oder mit mindestens einer Verbindung der Formel (IIa)

$$HN(X\text{-}SiR''_x(OR')_{3\text{-}x})_n(X'\text{-}SiR''_y(OR')_{3\text{-}y})_m \qquad (IIa),$$

erhalten, wobei die Substituenten die oben genannte Bedeutung haben.

Die erfindungsgemäß besonders bevorzugt eingesetzte, mit den Struktureinheiten (I) und (II) funktionalisierte Komponente (B) wird entsprechend durch Umsetzung von Polyisocyanaten mit mindestens einer Verbindung der Formel (Ia) und mit mindestens einer Verbindung der Formel (IIa) erhalten.

Dabei ist es zur Herstellung der Komponente (B) möglich, direkt die Gesamtmenge des zur Herstellung der Komponente (B) eingesetzten Di- und/oder Polyisocyanates mit der Mischung aus mindestens einer Verbindung (Ia) und mindestens einer Verbindung (IIa) umzusetzen. Ferner ist es zur Herstellung der Komponente (B) auch möglich, die Gesamtmenge des zur Herstellung der Komponente (B) eingesetzten Di- und/oder Polyisocyanates zunächst mit mindestens einer Verbindung (Ia) und danach mit mindestens einer Verbindung (IIa) umzusetzen.
Weiterhin ist es zur Herstellung der Komponente (B) möglich, zunächst nur einen Teil der Gesamtmenge des zur Herstellung der Komponente (B) eingesetzten Di- und/oder Polyisocyanates mit der Mischung aus mindestens einer Verbindung (Ia) und mindestens einer Verbindung (IIa) umzusetzen und anschließend noch den restlichen Teil der Gesamtmenge des zur Herstellung der Komponente (B) eingesetzten Di- und/oder Polyisocyanates zuzusetzen.
Schließlich ist es zur Herstellung der Komponente (B) möglich, zunächst nur einen Teil der Gesamtmenge des zur Herstellung der Komponente (B) eingesetzten Di- und/oder Polyisocyanates separat mit mindestens einer Verbindung (Ia) und einen anderen Teil der Gesamtmenge des zur Herstellung der Komponente (B) eingesetzten Di- und/oder Polyisocyanates separat mit mindestens einer Verbindung (IIa) umzusetzen und ggf. anschließend noch den ggf. noch verbliebenen restlichen Teil der Gesamtmenge des zur Herstellung der Komponente (B) eingesetzten Di- und/oder Polyisocyanates zuzusetzen. Selbstverständlich sind hier alle denkbaren Zwischenformen der genannten Umsetzungen zur Herstellung der Komponente (B) möglich.

Bevorzugt wird die Komponente (B) aber dadurch hergestellt, dass entweder
die Gesamtmenge des zur Herstellung der Komponente (B) eingesetzten Di- und/oder Polyisocyanates mit der Mischung aus mindestens einer Verbindung (Ia) und mindestens einer Verbindung (IIa) umgesetzt wird oder
dass ein Teil der Gesamtmenge des zur Herstellung der Komponente (B) eingesetzten Di- und/oder Polyisocyanates mit einer mit den Verbindungen (Ia) und (IIa) vollsilanisierten, also isocyanatgruppenfreien Komponente vermischt wird und/oder
dass ein Teil der Gesamtmenge des zur Herstellung der Komponente (B) eingesetzten Di- und/oder Polyisocyanates mit einer mit der Verbindung (Ia) vollsilanisierten, also isocyanatgruppenfreien Komponente (I) und mit einer mit der Verbindung (IIa) vollsilanisierten, also isocyanatgruppenfreien Komponente (II) vermischt wird.

Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. Evonik bzw. Silquest ® der Fa. OSI verfügbar.

Erfindungsgemäß bevorzugte Verbindungen (Ia) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (Ia) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. Evonik bzw. Silquest ® der Fa. OSI verfügbar.

Bevorzugt sind in der Komponente (B) zwischen 5 und 75 Mol-%, insbesondere zwischen 10 und 60 Mol-%, bevorzugt zwischen 15 und 50 Mol-%, der ursprünglich vorhandenen Isocyanatgruppen zu Struktureinheiten (I) und/oder (II), insbesondere zu Struktureinheiten (I) und (II), umgesetzt worden.

Insbesondere liegt in der Komponente (B) der Gesamtgehalt an Bissilan-Struktureinheiten (II) zwischen 5 und 100 Mol-%, bevorzugt zwischen 10 und 98 Mol-%, besonders bevorzugt zwischen 20 und 90 Mol-%, ganz besonders bevorzugt zwischen 30 und 80 Mol-%, jeweils bezogen auf die Gesamtheit der Struktureinheiten (I) plus (II), und der Gesamtgehalt an Monosilan-Struktureinheiten (I) zwischen 95 und 0 Mol-%, bevorzugt zwischen 90 und 2 Mol-%, besonders bevorzugt zwischen 80 und 10 Mol-%, besonders bevorzugt zwischen 70 und 20 Mol-%, jeweils bezogen auf die Gesamtheit der Struktureinheiten (I) plus (II).

Besonders bevorzugt sind in der Komponente (B) zwischen 5 und 55 Mol-%, bevorzugt zwischen 9,8 und 50 Mol-%, besonders bevorzugt zwischen 13,5 und 45 Mol-%, der ursprünglich vorhandenen Isocyanatgruppen zu Bissilan-Struktureinheiten der Formel (II) umgesetzt worden.

**Die hydroxylgruppenhaltige Komponente (C)**

Die erfindungsgemäßen Beschichtungsmittelzusammensetzungen können ggf. außer der polyhydroxylgruppenhaltigen Komponente (A) noch ein oder mehrere, von der Komponente (A) verschiedene, monomere hydroxylgruppenhaltige Komponenten (C) enthalten. Bevorzugt nehmen diese Komponenten (C) einen Anteil von 0 bis 10 Gew.-%, besonders bevorzugt von 0 bis 5 Gew.-%, jeweils bezogen auf den Bindemittelgehalt der Beschichtungsmittelzusammensetzung, ein.

Als hydroxylgruppenhaltige Komponente (C) werden niedermolekulare Polyole, insbesondere Diole, eingesetzt. Beispiele für geeignete Polyole (C) sind in der WO2014/016019 auf der Seite 12 sowie der WO2014/016026 auf der Seite 13 beschrieben. Bevorzugt werden solche niedermolekularen Polyole (C) in untergeordneten Anteilen der Polyolkomponente (A) beigemischt.

**Der Katalysator (D)**

Es ist erfindungswesentlich, dass als Katalysator (D) phosphor- und stickstoff-haltige Katalysatoren eingesetzt werden. Dabei können auch Mischungen aus zwei oder mehreren verschiedenen Katalysatoren (D) eingesetzt werden. Beispiele für geeignete phosphor- und stickstoff-haltige Katalysatoren (D) sind die Aminaddukte von ggf. substituierten Phosphonsäurediestern und ggf. substituierten Diphosphonsäurediestern, vorzugsweise aus der Gruppe, bestehend aus Aminaddukten von ggf. substituierten acyclischen Phosphonsäurediestern, von ggf. substituierten cyclischen Phosphonsäurediestern, von ggf. substituierten acyclischen Diphosphonsäurediestern und von ggf. substituierten cyclischen Diphosphonsäurediestern. Derartige Katalysatoren sind beispielsweise in der deutschen Patentanmeldung DE-A-102005045228 beschrieben.

Insbesondere werden aber Aminaddukte von ggf. substituierten Phosphorsäuremonoestern und/oder Aminaddukte von ggf. substituierten Phosphorsäurediestern, vorzugsweise aus der Gruppe, bestehend aus Aminaddukten von acyclischen Phosphorsäuremono- und -diestern und von cyclischen Phosphorsäuremono- und -diestern, eingesetzt.

Besonders bevorzugt werden als Katalysator (D) aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), und/oder aliphatische Triamine, insbesondere Dimethyldodecylamin oder Triethylamin, zu nennen. Bevorzugt werden zur Blockierung der Phosphorsäureester tertiäre Amine eingesetzt, die eine gute Wirksamkeit des Katalysators bei den Härtungsbedingungen gewährleisten. Besonders bevorzugt werden vor allem bei niedrigen Härtungstemperaturen von maximal 90°C zur Blockierung der Phosphorsäureester bicyclische Amine, insbesondere Diazabicyclo(2.2.2)octan (DABCO), und/oder Triethylamin eingesetzt.

Ganz besonders bevorzugt werden als Katalysator (D) mit Diazabicyclo(2.2.2)octan blockierte Phosphorsäureethylhexylester eingesetzt.

Bestimmte, mit Amin blockierte Phosphorsäurekatalysatoren sind auch kommerziell erhältlich (z.B. Nacure-Typen der Fa. King Industries).

Der Katalysator (D) bzw. - falls eine Mischung aus zwei oder mehreren Katalysatoren (D) eingesetzt wird - die Katalysatoren (D) werden vorzugsweise in Anteilen von 0,1 bis 15 Gew.-%, besonders bevorzugt in Anteilen von 0,5 bis 10,0 Gew.-%, ganz besonders bevorzugt in Anteilen von 0,75 bis 8,0 Gew.-%, bezogen auf den Bindemittelgehalt der Beschichtungsmittelzusammensetzung, eingesetzt. Eine geringere Wirksamkeit des Katalysators kann dabei durch entsprechend höhere Einsatzmengen teilweise kompensiert werden.

**Der Katalysator (Z)**

Es ist erfindungswesentlich, dass die Beschichtungsmittelzusammensetzung (K) zusätzlich noch mindestens einen, von dem Beschleuniger (R) und dem Katalysator (D) verschiedenen Katalysator (Z) für die Reaktion der Hydroxylgruppen mit den Isocyanatgruppen enthält.

Der Katalysator (Z) für die Reaktion zwischen den Hydroxylgruppen der Komponente (A) und den Isocyanatgruppen der Komponente (B) ist ausgewählt aus der Gruppe der Zink- Carboxylate und Bismut-Carboxylate sowie der Aluminium-, Zirkonium-, Titan-, und/oder Bor-Chelate und/oder der anorganischen Zinn-enthaltenden Katalysatoren sowie deren Mischungen.

Insbesondere kommen als anorganische, Zinn enthaltende Katalysatoren (Z) solche Zinnverbindungen in Frage, die keine Zinn-Kohlenstoffbindungen, sondern nur über Heteroatome, insbesondere über Sauerstoff, Schwefel oder Stickstoff, bevorzugt über Sauerstoff, gebundene Kohlenstoffatome enthalten. Besonders bevorzugt sind als anorganische, Zinn enthaltende Katalysatoren (Z) cyclische Zinn(IV)verbindungen mit ausschließlich über Sauerstoffatome und/oder Stickstoffatome und/oder Schwefelatome, insbesondere über Sauerstoffatome, gebundenen Alkylresten und/oder Cycloalkylresten und/oder Arylresten und/oder Arylalkylresten.

Anorganische, Zinn enthaltende Katalysatoren (Z) sind beispielsweise in der WO2014/048879, Seite 4, Zeile 20, bis Seite 10, Zeile 34, und Seite 15, Zeile 1, bis Seite 16, Tabelle 1, sowie der WO2014/048854, Seite 2, Zeile 32, bis Seite 9, Zeile 15, und Seite Seite 14, Zeile 1, bis Seite 15, Tabelle 1, und der EP-B1-2 493 948, Seite 2, Zeile 53, bis Seite 6, Zeile 54 und Seite 9, Katalysatoren 4 bis 8 und Seite 10, Katalysator 10, beschrieben.

Katalysatoren (Z) auf Basis von Aluminium-, Zirkonium-, Titan- und/oder Bor-Chelaten sind bekannt und beispielsweise in der WO06/042585, Seite 10, Zeilen 4 bis 21 beschrieben. Bei den Chelatliganden bildenden Verbindungen handelt es sich um organische Verbindungen mit mindestens zwei funktionellen Gruppen, die an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Es sind grundsätzlich alle organischen Verbindungen der genannten Art geeignet, solange sie nicht die Vernetzung der Beschichtungsmittelzusammensetzungen nachteilig beeinflussen oder gar völlig verhindern. Es können beispielsweise die Aluminium- und Zirkon-Chelatkomplexe, wie sie beispielsweise in dem amerikanischen Patent US 4,772,672 A, Spalte 8, Zeile 1, bis Spalte 9, Zeile 49, beschrieben werden, als Katalysatoren verwendet werden. Bevorzugt sind Aluminium- und/oder Zirkon- und/oder Titan- Chelate, wie beispielsweise Aluminiumethyl-acetoacetat und/oder Zirkonethylacetoacetat.

Katalysatoren (Z) auf Basis der Zink- und Bismut- Carboxylate sind ebenfalls bekannt. Insbesondere eingesetzt werden als Katalysatoren (Z) Zink(II)biscarboxylate und Bismut(III)triscarboxylate, bevorzugt Zink(II)bis-carboxylate und Bismut(III)triscarboxylate, bei denen der Carboxylat-Rest ausgewählt ist aus der Gruppe der Carboxylat-Reste von aliphatischen linearen und/oder verzweigten, ggf. substituierten Monocarbonsäuren mit 1 bis 24 C-Atomen im Alkylrest und/oder von aromatischen, ggf. substituierten Monocarbonsäuren mit 6 bis 12 C-Atomen im Arylrest. Der Carboxylatrest bestimmt weitgehend die Löslichkeit des resultierenden Katalysators in den eingesetzten Lackkomponenten. Als Beispiele für geeignete Katalysatoren (Z) seien die Zn(II)- und Bi(III)-salze der Essigsäure und der Ameisensäure genannt.

Besonders bevorzugt werden als Katalysator (Z) die Bi(III)-salze von verzweigten Fettsäuren und ganz besonders bevorzugt die Bi(III)-salze von verzweigten C3- bis C24-Fettsäuren, bevorzugt verzweigten C4- bis C20-Fettsäuren, besonders bevorzugt verzweigten C6- bis C16-Fettsäuren und ganz besonders bevorzugt aus der Gruppe der verzweigten Octansäuren, insbesondere 2-Ethylhexansäure, und der verzweigten Decansäuren, insbesondere Neodecansäure. Ganz besonders bevorzugt wird als Katalysator (Z) das Bi(III)-salz von verzweigten C3- bis C24-Fettsäuren eingesetzt. Das Bi(III)-salz von verzweigten Fettsäuren kann dabei auch in Form eines mehrkernigen Komplexes vorliegen.

Bestimmte Zn(II)- und Bi(III)-salze von verzweigten Fettsäuren sind auch kommerziell erhältlich (z.B. Borchi® Kat-Typen der Fa. Lanxess Corp. und K-Kat®-Typen der Fa. King Industries). Beispielsweise seien der unter der Bezeichnung Coscat® 83 von der Firma C.H. Erbslöh GmbH & Co. KG auf der Basis Bismuttrisneodecanoat, der unter der Bezeichnung Borchi® Kat 24 von der Firma Lanxess Corp. auf Basis Bismutcarboxylat, der unter der Bezeichnung K-Kat® 348 von der Firma King Industries auf der Basis Bismutcarboxylat sowie der unter der Bezeichnung K-Kat® XC-8203 von der Firma King Industries ebenfalls auf der Basis Bismutcarboxylat als besonders geeignete Katalysatoren (Z) genannt.

Der Katalysator (Z) bzw. - falls eine Mischung aus zwei oder mehreren Katalysatoren (Z) eingesetzt wird - die Katalysatoren (Z) werden vorzugsweise in Anteilen von 0,005 bis 1,0 Gew.-%, besonders bevorzugt in Anteilen von 0,02 bis 0,75 Gew.-%, ganz besonders bevorzugt in Anteilen von 0,05 bis 0,50 Gew.-%, bezogen auf den Bindemittelgehalt der Beschichtungsmittelzusammensetzung, eingesetzt. Eine geringere Wirksamkeit des Katalysators kann dabei durch entsprechend höhere Einsatzmengen teilweise kompensiert werden.

**Der Beschleuniger (R)**

Insbesondere wenn die erfindungsgemäß eingesetzten Beschichtungsmittelzusammensetzungen bei niedrigeren Temperaturen von bis zu 100 °C gehärtet werden, ist es erfindungswesentlich, dass die Beschichtungsmittelzusammensetzungen mindestens einen Beschleuniger (R) enthalten. Als Beschleuniger (R) können alle von dem Katalysator (D) und dem Katalysator (Z) verschiedenen Komponenten eingesetzt werden, die die Reaktion der Isocyanatgruppen der Komponente (B) mit den Hydroxylgruppen der Komponente (A) und ggf. (C) und/oder die Reaktion der Alkoxysilangruppen beschleunigen. Insbesondere sind als Beschleuniger (R) anorganische Säuren und/oder organische Säuren geeignet und/oder Teilester der anorganischen Säuren und/oder Teilester der organischen Säuren. Als Säuren werden insbesondere Sulfonsäuren, wie z.B. Dodecylbenzolsulfonsäure und Toluolsulfonsäure, monomere aromatische Carbonsäuren, wie z.B. Benzoesäure, tert.-Butylbenzoesäure, 3,4-Dihydroxybenzoesäure, Salicylsäure und/oder Acetylsalicylsäure, insbesondere Benzoesäure, Alkylphosphonsäuren, Dialkylphosphinsäuren, Phosphonsäure, Diphosphonsäure, Phosphorsäure, Phosphorsäureteilester u.Ä. eingesetzt.

Bevorzugt werden als Beschleuniger (R) phosphorhaltige Säuren und/oder Teilester phosphorhaltiger Säuren eingesetzt, wie beispielsweise Alkylphosphonsäuren, Dialkylphosphinsäuren, Phosphonsäure, Diphosphonsäure, Phosphinsäure, ggf. substituierte acyclische Phosphorsäuremonoester und/oder ggf. substituierte cyclische Phosphorsäuremonoester und/oder ggf. substituierte acyclische Phosphorsäurediester und/oder ggf. substituierte acyclische Phosphorsäurediester.

Besonders bevorzugt werden ggf. substituierte acyclische Phosphorsäuremonoester und/oder ggf. substituierte cyclische Phosphorsäuremonoester und/oder ggf. substituierte acyclische Phosphorsäurediester und/oder ggf. substituierte acyclische Phosphorsäurediester, insbesondere acyclische Phosphorsäurediester und cyclische Phosphorsäurediester, eingesetzt. Dabei werden insbesondere Phosphorsäureteilester (R) der allgemeinen Formel (V):

$R_{10}$-O<br>
\\<br>
P(O)OH (V);<br>
/<br>
$R_{11}$-O

eingesetzt, wobei die Reste $R_{10}$ und $R_{11}$ aus der Gruppe, bestehend aus:

- substituiertem und unsubstituiertem Alkyl- mit 1 bis 20, vorzugsweise 2 bis 16 und insbesondere 2 bis 10 Kohlenstoffatomen, Cycloalkylmit 3 bis 20, vorzugsweise 3 bis 16 und insbesondere 3 bis 10 Kohlenstoffatomen und Arylmit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom

ausgewählt werden und zusätzlich einer der Reste $R_{10}$ oder $R_{11}$ auch Wasserstoff darstellen kann.

Ganz besonders bevorzugt werden Phosphorsäureteilester (R) der allgemeinen Formel (V) eingesetzt, bei denen die Reste $R_{10}$ und $R_{11}$ aus der Gruppe, bestehend aus substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen, ausgewählt sind, und vor allem Bis(2-ethylhexyl)phosphat und/oder Bisphenylphosphat.

Der Beschleuniger (R) bzw. - falls eine Mischung aus 2 oder mehreren Beschleunigern (R) eingesetzt wird - die Beschleuniger (R) werden vorzugsweise in Anteilen von 0,05 bis 10,0 Gew.-%, besonders bevorzugt in Anteilen von 0,1 bis 5,0 Gew.-%, ganz besonders bevorzugt in Anteilen von 0,5 bis 2,5 Gew.-%, bezogen auf den Bindemittelgehalt der Beschichtungsmittelzusammensetzung, eingesetzt.

Katalysator (D), Katalysator (Z) und Beschleuniger (R) werden in den erfindungsgemäßen Beschichtungsmittelzusammensetzungen insbesondere in solchen Mengen eingesetzt, dass die Gesamtmenge Katalysator (D) plus Katalysator (Z) plus Beschleuniger (R) zwischen 0,2 und 21 Gew.-%, bevorzugt zwischen 0,6 und 11 Gew.-%, und besonders bevorzugt zwischen 1,1 und 8,1 Gew.-%, jeweils bezogen auf den Bindemittelgehalt der Beschichtungsmittelzusammensetzung, beträgt.

Ganz besonders bevorzugt sind Beschichtungsmittelzusammensetzungen, bei denen

i. der phosphor- und stickstoff-haltige Katalysator (D) ausgewählt ist aus der Gruppe der Addukte von Diazabicyclo(2.2.2)octan, Dimethyldodecylamin und/oder Triethylamin mit acyclischen Phosphorsäuremonoestern, mit cyclischen Phosphorsäuremonoestern, mit acyclischen Phosphorsäurediestern und/oder mit cyclischen Phosphorsäurediestern,

ii. der Katalysator (Z) ausgewählt ist aus der Gruppe der Bi(III)-salze von verzweigten C3- bis C24-Fettsäuren und

iii. der Reaktionsbeschleuniger (R) ausgewählt ist aus der Gruppe der acyclischen Phosphorsäurediester und der cyclischen Phosphorsäurediester.

**Die Kombination der Komponenten (A), (B), ggf. (C), (D), (Z), (R) sowie weitere Komponenten der Beschichtungsmittelzusammensetzungen**

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Komponente (A) sowie weitere nachfolgend beschriebene Komponenten, mit einer weiteren Lackkomponente, enthaltend die isocyanatgruppen-haltige Komponente (B) sowie gegebenenfalls weitere der nachfolgend beschriebenen Komponenten in an sich bekannter Weise vermischt, wobei in der Regel die Lackkomponente, die die Komponente (A) enthält, den Katalysator (D), den Katalysator (Z) und den Beschleuniger (R) sowie einen Teil des Lösemittels enthält.

Die Polyhydroxylgruppen-haltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Neben den Komponenten (A), (B) und ggf. (C) können noch weitere Komponenten (E) eingesetzt werden, welche vorzugsweise mit den Hydroxylgruppen des Poly(meth)acrylates (A) und/oder mit den freien Isocyanatgruppen der Komponente (B) und/oder mit den Alkoxysilylgruppen der Komponente (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, wie sie beispielsweise in der WO2014/016026 auf den Seiten 26 und 27 beschrieben sind.

In der Regel werden solche Komponenten (E) in Anteilen von bis zu 40 Gew.-%, bevorzugt von bis zu 30 Gew.-%, besonders bevorzugt von bis zu 25 Gew.-%, ganz besonders bevorzugt von 0 bis 15 Gew.-%, jeweils bezogen auf den Bindemittelgehalt der erfindungsgemäßen Beschichtungsmittelzusammensetzung, eingesetzt.

Bevorzugt werden erfindungsgemäß Beschichtungsmittelzusammensetzungen eingesetzt, die von 20,0 bis 80,0 Gew.-%, bevorzugt von 30,0 bis 70,0 Gew.-%, jeweils bezogen auf den Bindemittelgehalt der Beschichtungsmittelzusammensetzung, mindestens einer Polyhydroxylgruppen-haltigen Komponente (A), insbesondere mindestens eines Polyhydroxylgruppen-haltigen Polyacrylates (A) und/oder mindestens eines Polyhydroxylgruppen-haltigen Polymethacrylates (A), enthalten.

Bevorzugt werden erfindungsgemäß Beschichtungsmittelzusammensetzungen eingesetzt, die von 80,0 bis 20,0 Gew.-%, bevorzugt von 70,0 bis 30,0 Gew.-%, jeweils bezogen auf den Bindemittelgehalt der Beschichtungsmittelzusammensetzung, der Komponente (B) enthalten.

Bevorzugt enthalten die Beschichtungsmittelzusammensetzungen die Komponente (C) in einem Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelgehalt der Beschichtungsmittelzusammensetzung.

Die Gewichtsanteile der Komponente (A), der ggf. eingesetzten Komponente (C) und der Komponente (B) werden vorzugsweise solchermaßen gewählt, dass das molare Äquivalentverhältnis der Hydroxylgruppen der Polyhydroxylgruppen-haltigen Komponente (A) plus ggf. (C) zu den Isocyanatgruppen der Komponente (B) zwischen 1:0,5 und 1:1,5, bevorzugt zwischen 1:0,8 und 1:1,2 besonders bevorzugt zwischen 1:0,9 und 1:1,1, liegt.

Die Polyhydroxylgruppen-haltigen Komponente (A), die Polyhydroxylkomponente (C) und/oder die Isocyanat-Komponente (B) können in einem geeigneten Lösemittel vorliegen. Als Lösemittel (L) für die erfindungsgemäßen Beschichtungsmittel sind insbesondere solche geeignet, die im Beschichtungsmittel chemisch inert gegenüber den Komponenten (A), (B) und ggf. (C) sind und die auch bei der Härtung des Beschichtungsmittels nicht mit (A), ggf. (C) und (B) reagieren. Insbesondere sind hier aprotische Lösemittel zu nennen. Beispiele für solche aprotische Lösemittel sind aliphatische und/oder aromatische Kohlenwasserstoffe, Ketone, Ester, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Bevorzugt enthalten die erfindungsgemäßen Beschichtungsmittelzusammensetzungen außerdem mindestens ein übliches und bekanntes, von den Komponenten (A), (B), (D), (Z), (R), ggf. (C) und ggf. (E) verschiedenes Lackadditiv (F) in wirksamen Mengen, d.h. in Mengen vorzugsweise bis zu 20 Gew.-%, besonders bevorzugt von 0 bis zu 10 Gew.-%, jeweils bezogen auf den Bindemittelgehalt der Beschichtungsmittelzusammensetzung.

Beispiele geeigneter Lackadditive (F) sind:

- Radikalfänger;

- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die
30,0 bis 70,0 Gew.-%, bezogen auf den Bindemittelgehalt der Beschichtungsmittelzusammensetzung, mindestens eines polyhydroxylgruppenhaltigen Polyacrylates (A) und/oder mindestens eines polyhydroxylgruppenhaltigen Polymethacrylates (A) und/oder mindestens eines polyhydroxylgruppenhaltigen Polyesterpolyols (A) und/oder eines polyhydroxylgruppenhaltigen Polyurethans (A),
70,0 bis 30,0 Gew.-%, bezogen auf den Bindemittelgehalt der Beschichtungsmittelzusammensetzung, mindestens einer Komponente (B) mit im Mittel mindestens einer Isocyanatgruppe und mit im Mittel mindestens einer hydrolysierbaren Silangruppe,
0 bis 10 Gew.-%, bezogen auf den Bindemittelgehalt der Beschichtungsmittelzusammensetzung, mindestens einer hydroxylgruppenhaltigen Komponente (C),
0 bis zu 15 Gew.-%, bezogen auf den Bindemittelgehalt der Beschichtungsmittelzusammensetzung, mindestens eines Aminoplastharzes (E),
0,5 bis 10 Gew.-%, bezogen auf den Bindemittelgehalt der erfindungsgemäßen Beschichtungsmittelzusammensetzung, mindestens eines Katalysators (D),
0,02 bis 0,75 Gew.-%, bezogen auf den Bindemittelgehalt der erfindungsgemäßen Beschichtungsmittelzusammensetzung, mindestens eines Katalysators (Z),
0,1 bis 5,0 Gew.-%, bezogen auf den Bindemittelgehalt der erfindungsgemäßen Beschichtungsmittelzusammensetzung, mindestens eines Beschleunigers (R) und
0 bis 10 Gew.-%, bezogen auf den Bindemittelgehalt der Beschichtungsmittelzusammensetzung, mindestens eines üblichen und bekannten Lackadditivs (F)
enthalten.

Insbesondere handelt es sich bei den erfindungsgemäß eingesetzten Beschichtungsmitteln um transparente Beschichtungsmittel, vorzugsweise Klarlacke. Die erfindungsgemäß eingesetzten Beschichtungsmittel enthalten daher keine Pigmente oder nur organische transparente Farbstoffe oder transparente Pigmente.

In einer weiteren Ausführungsform der Erfindung kann die erfindungsgemäß eingesetzte Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelgehalt der Beschichtungsmittelzusammensetzung.

Die erfindungsgemäß bevorzugt eingesetzten transparenten Beschichtungsmittel können auf pigmentierte Basislacke appliziert werden. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die transparente Beschichtungsmittelzusammensetzung aufgebracht. Anschließend wird die Zweischichtlackierung bei Temperaturen von 20 bis 200°C während einer Zeit von 1 min bis zu 10 h eingebrannt, wobei bevorzugt niedrigere Temperaturen zwischen 20 und 100°C, bevorzugt zwischen 30 und 90 °C, und entsprechend längere Härtezeiten von bis zu 60 min zur Anwendung kommen.

Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch

gekennzeichnet sind, dass die Klarlackschicht aus der erfindungsgemäßen Beschichtungsmittelzusammensetzung hergestellt worden ist.

Die Basislacke sind dem Fachmann bekannt. Es können sowohl wasserverdünnbare Basislacke als auch Basislacke auf Basis von organischen Lösemitteln eingesetzt werden. Die Basislacke enthalten dabei üblicherweise ein oder mehrere Bindemittel, ein oder mehrere Pigmente, ggf. ein oder mehrere Vernetzungsmittel, ein oder mehrere organische Lösemittel und übliche Hilfs- und Zusatzstoffe sowie im Falle von Wasserbasislacken Wasser als zusätzliches Lösemittel.

Geeignete Basislacke sind beispielsweise in der EP-A-0 692 007 und in den dort in Spalte 3, Zeilen 50ff. angeführten Dokumenten beschrieben.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation und Härtung der Beschichtungsmittelzusammensetzungen erfolgt nach den üblichen und bekannten Methoden, wie sie beisielsweise in der WO2014/016026 auf den Seiten 29 bis 33 beschrieben sind.

Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Automobilreparaturlackierung und der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

Die vorliegende Erfindung wird nun anhand der nachfolgenden Beispiele näher beschrieben. Alle Angaben stellen dabei Gewichtsangaben dar, sofern nicht ausdrücklich etwas anderes angegeben wird.

### Herstellung eines Polyacrylat-Polyols (A1)

In einem Stahlreaktor mit Monomeren- und Initiatorzulauf, Thermometer, Ölheizung und Rückflusskondensator werden 26,63 g Solventnaphtha® (kommerziell erhältliches aromatisches Lösungsmittelgemisch von DHC Solvent Chemic GmbH) vorgelegt und auf 40°C geheizt. Dann wird eine Mischung M1 bestehend aus 2,94 g Solventnaphtha® und 1,54 g Di-tert-butylperoxid unter Rühren zugetropft. Die Dosiergeschwindigkeit wird so eingestellt, dass die Zugabe der Mischung M1 nach 6.75 Stunden beendet ist. 15 Minuten nachdem die Zugabe der Mischung M1 gestartet wurde, wird die Mischung M2 bestehend aus 8,21 g Styrol, 20,2 g t-Butylacrylat, 12,62 g Butandiolmonoacrylat, 8,84 g n-Butylmethacrylat, 12,64 g Hydroxylethylacrylat und 0,63 g Acrylsäure zugetropft. Die Dosiergeschwindigkeit wird so eingestellt, dass die Zugabe der Mischung M2 nach 6 Stunden beendet ist. Nachdem die Zugabe von Mischung M1 beendet ist, wird die Mischung für weitere 2 Stunden bei 140°C gehalten und dann auf unter 100°C abgekühlt. Dann wird die Mischung mit 5,79 g Solventnaphtha® (kommerziell erhältliches aromatisches Lösungsmittelgemisch von DHC Solvent Chemic GmbH) verdünnt. Die resultierende Lösung des Polyacrylatpolyols (A1) hat einen Festkörper von 65% (1 Stunde, 130°C Umluftofen), eine Viskosität von 18.5 dPas (ICI Kegel/Platte Viskometer, 23°C), eine OH-Zahl von 175 mg KOH/g und eine Säurezahl von 8-12 mg KOH/g.

### Herstellung der Härterlösung (B1)

In einem 250 ml Dreihalskolben mit Rührmagnet, Innenthermometer und Tropftrichter wird eine Mischung aus 51,6 g eines trimerisierten Isocyanurates auf Basis Hexamethyl-1,6-diisocyanat (Desmodur® N 3600, Firma Bayer, Leverkusen) und 20,0 g Butylacetat vorgelegt. Unter Stickstoffüberschleierung wird über den Tropftrichter eine Mischung

aus 26,4 g Bis-[3-trimethoxysilyl-propyl]amin (Dynasylan® 1124, EVONIK, Rheinfelden) und 2,0 g N-[3-(trimethoxysilyl)-propyl]-butylamin (Dynasylan® 1189, Firma EVONIK, Rheinfelden) langsam zugetropft. Die Reaktion ist exotherm. Die Zulaufgeschwindigkeit wird so gewählt, dass die Innentemperatur einen Maximalwert von 60°C nicht übersteigt. Über den Tropftrichter werden danach weitere 4 g Butylacetat zugegeben. Es wird für weitere vier Stunden bei 60°C gehalten, bis die titrimetische Bestimmung des Isocyanatgehalts (nach DIN EN ISO 11909) einen konstanten Wert 8,3-8,8% NCO, bezogen auf Festsubstanz) ergibt.

**Herstellung des Katalysators (D)**

In einem 100 ml Dreihalskolben, ausgerüstet mit Rücklaufkühler und Rührer werden 11,78 g DABCO (Diazabicyclo(2.2.2)octan), 75,67 g Propanol und 56,38 g Iso-Butanol unter Stickstoffüberschleierung vorgelegt. Bei ca. 45°C werden 32,24 g Bis(2-Ethylhexyl)-phosphat langsam zugetropft, dabei wird die Temperatur bei max. 50°C gehalten. Die Mischung wird weitere 3 Stunden bei 40°C gerührt. Es wird eine 25%ige Lösung des Katalysators (D) erhalten.

**Formulierung der Beschichtungsmittel der erfindungsgemäßen Beispiele 1 und 2 sowie der Beschichtungsmittel der Vergleichsbeispiele V1 bis V5 sowie der entsprechenden Beschichtungen der Beispiele 1 und 2 sowie der Vergleichsbeispiele V1 bis V5**

Zur Herstellung der Stammlacke (S1) und (S2) der erfindungsgemäßen Beispiele und der Stammlacke (VS1) bis (VS5) der Vergleichsbeispiele V1 bis V5 werden die in Tabelle 1 angegebenen Bestandteile in angegebener Reihenfolge (von oben beginnend) in einem geeigneten Gefäß in dieser Reihenfolge eingewogen und innig miteinander verrührt.

Zur Herstellung der Beschichtungsmittel (K1) und (K2) der erfindungsgemäßen Beispiele 1 und 2 sowie der Beschichtungsmittel (VK1) bis (VK5) der Vergleichsbeispiele werden zu der in Tabelle 1 angegebenen Menge Stammlack die angegebenen Mengen Härterlösung (B1) in einem geeigneten Gefäß zugegeben und innig miteinander verrührt.

Tabelle 1: Zusammensetzung der Stammlacke S1 und S2 sowie VS1 bis VS5 sowie der Beschichtungsmittel K1 und K2 und VK1 bis VK5 in Gew.-Teilen

| | V1 | V2 | V3 | V4 | 1 | 2 | V5 |
|---|---|---|---|---|---|---|---|
| Stammlackkomponenten | VS1 | VS2 | VS3 | VS4 | S1 | S2 | VS5 |
| Polyacrylat- Polyols (A1) | 49,7 | 49,7 | 49,7 | 49,7 | 49,7 | 49,7 | 49,7 |
| Tinuvin® 292 [1)] | 1,0 | 1,0 | 1,0 | 1,0 | 1,0 | 1,0 | 1,0 |
| Tinuvin® 384 [2)] | 1,1 | 1,1 | 1,1 | 1,1 | 1,1 | 1,1 | 1,1 |
| Butylacetat | 44,7 | 44,7 | 44,7 | 44,7 | 44,7 | 44,7 | 44,7 |
| Katalysator (D) | 2,3 | 2,3 | 2,3 | 2,3 | 2,3 | 2,3 | |
| Reaktionsbeschleuniger (R) [3)] | | | 1,0 | | 1,0 | | |
| Coscat 83 [4)] | | 0,1 | | | 0,1 | 0,1 | |
| K-Kat XK-634 [5)] | | | | | | | 0,08 |
| Benzoesäure | | | | 0,38 | | 0,38 | 0,5 |
| Summe Stammlack-komponenten | 98,8 | 98,9 | 99,8 | 99,18 | 99,9 | 99,28 | 97,08 |
| | | | | | | | |

(fortgesetzt)

| | V1 | V2 | V3 | V4 | 1 | 2 | V5 |
|---|---|---|---|---|---|---|---|
| Härterlösung B | 50 | 50 | 50 | 50 | 50 | 50 | 50 |
| Erläuterungen zu Tabelle 1:<br>[1] Tinuvin® 292 = Handelsübliches Lichtschutzmittel der Firma BASF S.E. auf HALS Basis<br>[2] Tinuvin® 384 = Handelsübliches Lichtschutzmittel der Firma BASF S.E. auf Basis eines UV Absorbers<br>[3] Baysolvex D2EHPA = Handelsübliches Bis(2-ethylhexyl)phosphat der Firma Lanxess<br>[4] Coscat® 83 = handelsüblicher Katalysator von der Firma C.H. Erbslöh GmbH & Co. KG auf der Basis Bismuttrisneodecanoat<br>[5] K-Kat XK-634 = Katalysator der Firma King Industries auf der Basis von mit Tetramethylguanidin umgesetztem Zinkcarboxylat | | | | | | | |

**Herstellung der Beschichtungen der Beispiele 1 und 2 und der Vergleichsbeispiele V1 bis V5**

Mit handelsüblicher, gehärteter KTL beschichtete Bonderbleche werden mit handelsüblichem schwarzen bzw. für die Prüfung der Thermovergilbung weißen Wasserbasislack (ColorBrite® der Firma BASF Coatings GmbH) beschichtet und jeweils 10 min bei Umgebungstemperatur abgelüftet und dann 10 min bei 80°C getrocknet. Die Beschichtungsmittel des Beispiels 1 und 2 sowie der Vergleichsbeispiele V1 bis V5 werden anschließend mit einer Fließbecherpistole appliziert und zusammen mit dem Basislack 30 Minuten bei 80°C eingebrannt. Die Schichtdicke des Klarlackes beträgt 30 bis 35 μm, die des Basislackes ~15 μm.

Für die Prüfung des NCO-Umsatzes wurde der fertige Lack direkt auf Stamylan-Tafeln ohne Basislack appliziert, um so freie Filme zu erzeugen, die für die Messungen benötigt werden.

**Bestimmung des Isocyanatumsatzes**

Die Bestimmung des NCO-Umsatzes erfolgt durch die Messung der Proben aus Tabelle 1 mittels ATR-IR-Spektroskopie. Dazu wurden sowohl die gemischten Nassmuster der frischen Komponenten (also Stammlack plus Härter) als auch die applizierten Proben jeweils eine und 24 Stunden nach Ofen spektroskopiert.

Zur Umsatzberechnung wurde die Intensität der Isocyanatbande bei 2260cm-1 herangezogen und ihre Abnahme in Relation zur Bande des frischen Nassmusters berechnet. Normiert wurden die Spektren auf die Isocyanuratbande bei 1690cm-1, deren Intensität kaum durch die Vernetzungsreaktion beeinflusst wird. Die Umsatzwerte sind in Tabelle 2 zusammengestellt.

**Prüfung der Thermovergilbung**

Die aufgebauten Tafeln auf weißem Basislack werden ca. 30 Minuten nach Einbrennung im Umluftofen mittels des Farbtonmessgerätes X-Rite Mehrwinkelspekralphotometer vermessen und der b*-Wert im L*a*b*-Far-braum (CIELAB-System) bestimmt. Dann werden die Tafeln für 7 Tage bei 100°C im Umluftofen gelagert. Ca. 1 Stunde nach Beendigung der Lagerung werden die Tafeln erneut farbmetrisch vermessen und der db-Wert bestimmt. Diese Ergebnisse finden sich in Tabelle 2.

**Prüfung Mikroeindringhärte**

Den Einfluss der Katalysatoren auf die Härte des Klarlackfilms wurde mittels Mikroeindringhärte Messungen (DIN EN ISO 14577-4 DE) untersucht. Die Ergebnisse sind in Tabelle 2 dargestellt.

**DMA Untersuchungen Filmeigenschaften**

Die Speichermoduli E'(200) und E'(min) sowie die Werte für E"(max) und tanδ (max), die einen Wert für die Glasübergangstemperatur Tg widerspiegeln, der jeweiligen gehärteten Beschichtung werden mit der Dynamisch-Mechanischen-Thermo-Analyse (DMTA) bei einer Heizrate von 2 K/min mit dem Gerät DMTA V der Firma Rheometrics Scientific mit einer Frequenz von 1 Hz und einer Amplitude von 0,2% gemessen. Die DMTA Messungen werden an freien Filmen mit einer Schichtdicke von 40 μm +/-10 μm durchgeführt. Hierzu wird das zu prüfende Beschichtungsmittel auf Substraten (Stamylan-Tafeln) appliziert. Die so erhaltene Beschichtung wird 30 Minuten bei einer Objekttemperatur von 80°C gehärtet und nach der Härtung 1 Stunde bzw. 3 Tage bei 25 °C gelagert, bevor die DMTA Messungen

durchgeführt werden. Die daraus ermittelten Werte sind in Tabelle 2 dargestellt.

**DMA Untersuchungen Onset/Offset**

Die Vernetzungsbeginntemperatur der flüssigen Lacke wird im Rahmen der Erfindung experimentell mittels Dynamisch-Mechanischer Thermischer Analyse (DMTA) bestimmt. Beschrieben ist diese Methode beispielsweise in der DIN EN ISO 6721-1, wobei die Methode in dieser Norm im Rahmen der Bestimmung dynamisch-mechanischer Eigenschaften von Kunststoffen erläutert wird. Bei der DMA werden durch Anwendung einer oszillierenden Kraft auf die Probe frequenz- und temperaturabhängig die viskoelastischen Eigenschaften (das heißt die Steifigkeit, ausgedrückt durch das gemessene Speichermodul E', und die dissipierte Arbeit pro Schwingung, ausgedrückt durch das gemessene Verlustmodul E") der Probe erfasst. Je steifer ein Material ist, desto größer ist der Betrag des Speichermoduls, das heißt das Material setzt seiner elastischen Verformung einen größeren Widerstand entgegen. Im Rahmen der vorliegenden Erfindung wird mit der DMA durch Belastung der Probe mit einer sinusförmigen Schwingung konstanter Amplitude und Frequenz bei kontinuierlicher Temperaturerhöhung das Speichermodul bestimmt. Die Temperatur, bei der das Speichermodul beginnt anzusteigen, wird im Rahmen der vorliegenden Erfindung als Vernetzungsbeginntemperatur der Proben bezeichnet. Die Messungen wurden mit einem Gerät des Typs Triton 2000B der Firma Triton Technology durchgeführt. Dabei wird 1 g des jeweiligen zu vermessenden Beispiels VB1-VB4 und B1 und B2 auf ein in das Messgerät eingespanntes Glasfasernetz gegeben und bei kontinuierlicher Temperaturerhöhung von 2°C pro Minute bei sinusförmiger Probenbelastung (konstante Frequenz, konstante Amplitude im linearen Messbereich) das Speichermodul E' gemessen. Die Messung erfolgt in einem für die Probe relevanten Temperaturbereich (hier: ab 2°C bis 200°C). Die Vernetzungsbeginntemperatur wird dann graphisch aus dem Speichermodul/Temperaturdiagramm ermittelt und ist die Temperatur des Schnittpunkts der extrapolierten Basislinie des Speichermoduls vor der einsetzenden Vernetzung und der extrapolierten Geraden, die sich aus dem quasi-linearen Anstiegsbereich des Speichermoduls nach dem Einsetzen der Vernetzung ergibt. Auf diese Weise kann die Vernetzungsbeginntemperatur auf +/- 2°C genau bestimmt werden.

**Messung der Chemikalienbeständigkeit**

Die Chemikalienbeständigkeit der Lackproben wurde 7 Tage nach Einbrennen der Lacke durchgeführt. Die Prüfungen erfolgten bei Normalklima nach DIN EN ISO 3270.

Verwendet wird ein Prüfblech mit den Maßen 100 mm x 570 mm. Je nach Prüfmedium werden vor Temperaturbelastung 45 bzw. 23 Tropfen in Längsrichtung, d. h. 1 Tropfen je Heizsegment, mit einem Pipettierautomat oder von Hand mittels einer Mikropipette innerhalb von max. 10 Minuten auf das Prüfblech aufgetragen. Die Prüfungen erfolgen im Gradientenofen bei einem linearen Temperaturgradienten von 35 °C bis 78 °C mit einer Toleranz von ±1 °C pro Heizsegment. Die Prüfdauer im Gradientenofen beträgt 30 Minuten. Nach der durchgeführten Prüfung werden das Probenblech zuerst mit lauwarmen Wasser und danach mit VE-Wasser abgewaschen und anschließend mit Isohexan und einem Mikrofasertuch gereinigt. Als Prüfmedien werden die folgenden zwei Chemikalien verwendet:

| Chemikalie | Konzentration | Prüfmenge | Heizsegmente |
|---|---|---|---|
| Salzsäure p.A. | c(HCl) = 10,0% | 25µl | 1 Segment |
| Natronlauge p.A. | c(NaOH) = 5,0% | 25µl | 1 Segment |

In Tabelle 2 sind die Temperaturen aufgeführt, ab welcher eine Veränderung der Lackoberfläche zu erkennen war.

**Bestimmung der Kratzfestigkeit**

Die Kratzfestigkeit der Oberflächen der resultierenden Beschichtungen wurde mittels des Hammertests (50 Doppelhübe mit Stahlwolle (RAKSO®00(Fein)) und einem Auflagegewicht von 1 kg die mit einem Hammer durchgeführt. Anschließend wird der Restglanz bei 20° mit einem handelsüblichen Glanzgerät bestimmt. Ergebnisse der Prüfung sind in Tabelle 2 zu finden.

**Messung der Pendelhärte n. König**

Die Bestimmung der Pendelhärte nach König erfolgt analog DIN En ISO 1522 DE und deren Ergebnisse sind

in Tabelle 2 zu finden.

Tabelle 2: Prüfergebnisse der Beschichtungen der Beispiele 1 und 2 sowie der Vergleichsbeispiele V1 bis V5

| | V1 | V2 | V3 | V4 | 1 | 2 | V5 |
|---|---|---|---|---|---|---|---|
| NCO-Umsatz / % nach 1h | 23 | 67 | 14 | 25 | 43 | 74 | |
| NCO-Umsatz / % nach 24h | 48 | 77 | 40 | 52 | 60 | 85 | |
| Mikroeindringhärte 25.6 mN [N/mm²] 0.25h | 3,12 | 4,58 | 6,57 | 3,62 | 14,21 | 7,13 | |
| Mikroeindringhärte 25.6 mN [N/mm²] 1d | 7,1 | 9,1 | 31,5 | 11,08 | 31,1 | 14,38 | |
| Mikroeindringhärte 25.6 mN [N/mm²] 3d | 14,15 | 12,34 | 50,64 | 27,71 | 33,5 | 22,49 | |
| mittlere Eindringtiefe / µm 0.25h | 17,19 | 14,26 | 11,95 | 15,99 | 8,17 | 11,49 | |
| mittlere Eindringtiefe / µm 1d | 11,49 | 10,21 | 5,53 | 9,27 | 5,56 | 8,18 | |
| mittlere Eindringtiefe / µm 3d | 8,19 | 8,85 | 4,36 | 6,73 | 5,35 | 6,61 | |
| Pendelhärte n. König / Anzahl Schläge 0.25h | 10 | 19 | 19 | 11 | 29 | 22 | |
| Pendelhärte n. König / Anzahl Schläge 1h | 10 | 19 | 20 | 12 | 29 | 22 | |
| Pendelhärte n. König / Anzahl Schläge 2h | 10 | 19 | 20 | 12 | 29 | 22 | |
| Pendelhärte n. König / Anzahl Schläge 6h | 12 | 21 | 22 | 14 | 29 | 24 | |
| Pendelhärte n. König / Anzahl Schläge 1d | 19 | 25 | 34 | 24 | 35 | 30 | |
| Gradientenofen Salzsäure | <36°C | 53°C | 39°C | 53°C | 56°C | 50°C | |
| Gradientenofen Natronlauge | <36°C | <36°C | <36°C | <36°C | 40°C | 40°C | |

| | | | | | | | |
|---|---|---|---|---|---|---|---|
| Thermovergilbung db-Wert | 0,43 | 0,49 | 0,46 | 0,45 | 0,49 | 0,49 | 0,84 |
| E´´max 1h | 13°C | 30°C | 17°C | 22°C | 35°C | 39°C | |
| E´´max 3d | 44°C | 44°C | 52°C | 50°C | 60°C | 48°C | |
| tanδ max 1h | 35°C | 46°C | 43°C | 44°C | 51°C | 54°C | |
| tanδ max 3d | 58°C | 57°C | 66°C | 63°C | 74°C | 59°C | |
| E´min 1h / $10^7$ Pa | 1,7 | 1,7 | 2,9 | 2,4 | 3,2 | 2,8 | |
| E´min 3d / $10^7$ Pa | 2,8 | 2,1 | 4,0 | 3,5 | 4,9 | 2,9 | |
| E´200°C/E´min 1h | 4,2 | 3,3 | 2,4 | 3,1 | 1,6 | 2,2 | |
| E´200°C/E´min 3d | 2,4 | 2,4 | 1,5 | 1,9 | 1,4 | 2,0 | |
| Onset Temperatur / °C | 63 | 46 | 53 | 59 | 43 | 43 | |
| Offset Zeit / min | 22 | 21 | 16 | 19 | 14 | 14 | |
| Hammertest 50 DH / Restglanz% | 44 | 60 | 92 | 60 | 84 | 54 | |

**Diskussion der Prüfergebnisse:**

Der Vergleich des Vergleichsbeispiels V1 (nur mit DABCO blockierter Phosphorsäureteilester (D)) mit dem Vergleichsbeispiel V2 (mit DABCO blockierter Phosphorsäureteilester (D) plus Wismuthcarboxylat (Z)) zeigt ebenso wie der Vergleich des Beispiels 1 (Kombination aus mit DABCO blockiertem Phosphorsäureteilester (D), Wismuthcarboxylat (Z) und Phosphorsäureteilester (R)) sowohl mit dem Vergleichsbeispiel V1 (nur mit DABCO blockierter Phosphorsäureteilester (D)) als auch mit dem Vergleichsbeispiel V3 (mit DABCO blockierter Phosphorsäureteilester (D) plus Phosphorsäureteilester (R)), dass durch den Zusatz des Wismuthcarboxylates (Z) der Isocyanatumsatz deutlich erhöht wird, wobei die Erhöhung des Isocyanatumsatzes durch den Zusatz des Wismuthcarboxylates (Z) im Vergleichsbeispiel V2 ohne den Zusatz des Reaktionsbeschleunigers (R) auf Basis Phosphoräureteilester wesentlich höher ausfällt als bei gleichzeitigem Zusatz des Wismuthcarboxylates (Z) und des Reaktionsbeschleunigers (R) auf Basis Phosphorsäureteilester wie im erfindungsgemäßen Beispiel 1.

Trotz dieses niedrigeren Isocyanatumsatzes im erfindungsgemäßen Beispiel 1 im Vergleich zum Isocyanatumsatz des Vergleichsbeispiels V2 zeigt aber die erfindungsgemäße Beschichtung des Beispiels 1 nicht nur gegenüber dem Vergleichsbeispiel V1, sondern auch gegenüber dem Vergleichsbeispiel V2 wie auch gegenüber dem Vergleichsbeispiel V3 eine sehr deutlich verbesserte Mikroeindringhärte, eine sehr deutlich verbesserte mittlere Eindringtiefe und eine deutlich verbesserte Beständigkeit gegenüber Natronlauge. Durch den Zusatz des Reaktionsbeschleunigers (R) wird eine deutlich verbesserte Silanvernetzung erreicht, wie der Vergleich der Vergleichsbeispiele V1 und V2 mit dem erfindungsgemäßen Beispiel 1 zeigt.

Außerdem zeigt der Vergleich des Beispiels 1 (Kombination aus mit DABCO blockiertem Phosphorsäureteilester (D), Wismuthcarboxylat (Z) und Phosphorsäureteilester (R)) mit dem Vergleichsbeispiel V1 (nur mit DABCO blockierter Phosphorsäureteilester (D)) und dem Vergleichsbeispiel V2 (mit DABCO blockierter Phosphorsäureteilester (D) plus Wismuthcarboxylat (Z)), dass durch den Zusatz des Wismuthcarboxylates (Z) zusätzlich der Beginn der Vernetzung (also die Onsettemperatur) bei deutlich niedrigerenTemperaturen von 46 °C im Vergleichsbeispiel V2 und von sogar nur 43 °C in den erfindungsgemäßen Beispielen 1 und 2 einsetzt als ohne den Zusatz des Wismuthcarboxylates (Z) im Vergleichsbeispiel V1 mit einer Onsettemperatur von 66 °C und im Vergleichsbeispiel V3 (mit DABCO blockierter Phosphorsäureteilester (D) und Phosphorsäureteilester (R)) mit einer Onsettemperatur von 63 °C.

Im Vergleichsbeispiel V3 ist durch den Zusatz des Reaktionsbeschleunigers (R) zwar ebenfalls die Onsettemperatur mit einem Wert von 53°C im Vergleich zum Vergleichsbeispiel V1 mit einem Wert von 63°C leicht erniedrigt, liegt aber deutlich höher als die Onsettemperatur in den erfindungsgemäßen Beispielen 1 und 2 mit einer Onsettemperatur von nur 43°C. Gleichzeitig ist aber der OH/NCO Umsatz im Vergleichsbeispiel V3 mit Abstand am niedrigsten und im Vergleich zu Vergleichsbeispiel V1 sogar noch weiter erniedrigt. Dies bedeutet, dass im Vergleichsbeispiel V3 der Zusatz

des Reaktionsbeschleunigers (R) die OH/NCO Reaktion sogar hemmt.

Ferner ist die Pendelhärte, jeweils gemessen nach 0,25h, 1h, 2h und nach 6h, der resultierenden Beschichtungen der erfindungsgemäßen Beispiele 1 und 2 wesentlich höher als die der resultierenden Beschichtungen aller Vergleichsbeispiele V1 bis V4.

Schließlich ist überraschenderweise auch die Chemikalienbeständigkeit gegenüber Natronlauge der resultierenden Beschichtungen der erfindungsgemäßen Beispiele 1 und 2 höher als die der resultierenden Beschichtungen aller Vergleichsbeispiele V1 bis V4 sowie die Chemikalienbeständigkeit gegenüber Salzsäure der resultierenden Beschichtungen der erfindungsgemäßen Beispiele 1 und 2 höher als die der resultierenden Beschichtungen der Vergleichsbeispiele V1 und V3. Je mehr also der Reaktionsbeschleuniger (R) die Silanvernetzung verbessert, um so mehr wird gleichzeitig auch die OH/NCO Reaktion gehemmt. Dies verdeutlicht, dass sich die verschiedenen Katalysatoren (D) und (Z) sowie der Reaktionsbeschleuniger (R) alle gegenseitig beeinflussen und nur erfindungsgemäß eine ausgewogene Mischung gefunden wurde, die sowohl zu einer sehr guten Silanvernetzung als auch zu einem sehr guten OH/NCO-Umsatz führt und damit das hervorragende Eigenschaftsniveau der erfindungsgemäßen Beschichtung selbst bei Härtung der Beschichtung bei gemäßigten Temperaturen von maximal 90 °C gewährleistet.

Die resultierende Beschichtung des Vergleichsbeispiels 5 wurde nicht weiter untersucht, da die Thermovergilbung inakzeptabel hoch war.

## Patentansprüche

**1.** Beschichtungsmittelzusammensetzung enthaltend

a) mindestens eine Polyhydroxylgruppenhaltige Komponente (A),
b) mindestens eine Komponente (B) mit im Mittel mindestens einer Isocyanatgruppe und mit im Mittel mindestens einer hydrolysierbaren Silangruppe der Formel (I)

-NR-(X-SiR"x(OR')3-x) (I),

und/oder
mindestens einer hydrolysierbaren Silangruppe der Formel (II)

-N(X-SiR"x(OR')3-x)n(X'-SiR"y(OR')3-y)m (III),

wobei

R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,

n = 0 bis 2, m = 0 bis 2, m+n = 2 sowie x, y = 0 bis 2 ist,
c) mindestens einen phosphor- und stickstoff-haltigen Katalysator (D) für die Vernetzung von Silangruppen und
d) mindestens einen Katalysator (Z) für die Reaktion der Hydroxylgruppen mit den Isocyanatgruppen,

**dadurch gekennzeichnet, dass**

i. der Katalysator (Z) ausgewählt ist aus der Gruppe der Zink- und Wismutcarboxylate, der Aluminium-, Zirkonium-, Titan- und/oder Bor-Chelate und/oder der anorganischen, Zinn-enthaltenden Katalysatoren sowie deren Mischungen und
ii. die Beschichtungsmittelzusammensetzung mindestens einen Reaktionsbeschleuniger (R) enthält, der ausgewählt ist aus der Gruppe der anorganischen Säuren und/oder der organischen Säuren und/- oder der Teilester

der anorganischen Säuren und/oder der Teilester der organischen Säuren.

2. Beschichtungsmittelzusammensetzung nach Anspruch 1, **dadurch gekennzeichnet, dass** sie mindestens eine Komponente (B) mit im Mittel mindestens einer hydrolysierbaren Silangruppe der Formel (I) und mindestens einer hydrolysierbaren Silangruppe der Formel (II) enthält.

3. Beschichtungsmittelzusammensetzung nach Anspruch 1 oder 2, **dadurch gekennzeichnet, dass** der phosphor- und stickstoff-haltige Katalysator (D) ausgewählt ist aus der Gruppe der Aminaddukte von ggf. substituierten acyclischen Phosphorsäuremonoestern, der Aminaddukte von ggf. substituierten cyclischen Phosphorsäuremonoestern, der Aminaddukte von ggf. substituierten acyclischen Phosphorsäurediestern, der Aminaddukte von ggf. substituierten cyclischen Phosphorsäurediestern, der Aminaddukte von acyclischen Phosphonsäurediestern, der Aminaddukte von cyclischen Phosphonsäurediestern, der Aminaddukte von acyclischen Diphosphonsäurediestern und/oder der Aminaddukte von cyclischen Diphosphonsäurediestern, bevorzugt aus der Gruppe der Addukte von bicyclischen Aminen und/oder von aliphatischen Triaminen mit ggf. substituierten acyclischen Phosphorsäuremonoestern und/oder mit ggf. substituierten cyclischen Phosphorsäuremonoestern und/oder mit ggf. substituierten acyclischen Phosphorsäurediestern und/oder mit ggf. substituierten cyclischen Phosphorsäurediestern.

4. Beschichtungsmittelzusammensetzung nach einem der Ansprüche 1 bis 3, **dadurch gekennzeichnet, dass** der Katalysator (Z) ausgewählt ist aus der Gruppe der Zink- und Wismutcarboxylate, insbesondere der Bi(III)-salze von verzweigten C3- bis C24-Fettsäuren.

5. Beschichtungsmittelzusammensetzung nach einem der Ansprüche 1 bis 4, **dadurch gekennzeichnet, dass** der Reaktionsbeschleuniger (R) ausgewählt ist aus der Gruppe der Alkylphosphonsäuren, Dialkylphosphinsäuren, Phosphonsäure, Diphosphonsäure, Phosphinsäure, der ggf. substituierten acyclischen Phosphorsäuremonoester und/oder der ggf. substituierten cyclischen Phosphorsäuremonoester und/oder der ggf. substituierten acyclischen Phosphorsäurediester und/oder der ggf. substituierten cyclischen Phosphorsäurediester.

6. Beschichtungsmittelzusammensetzung nach einem der Ansprüche 1 bis 5, **dadurch gekennzeichnet, dass** der Reaktionsbeschleuniger (R) ausgewählt ist aus der Gruppe der ggf. substituierten acyclischen Phosphorsäuremonoester und/oder ggf. substituierten cyclischen Phosphorsäuremonoester und/oder ggf. substituierten acyclischen Phosphorsäurediester und/oder ggf. substituierten cyclischen Phosphorsäurediester.

7. Beschichtungsmittelzusammensetzung nach einem der Ansprüche 1 bis 6, **dadurch gekennzeichnet, dass**

   i. der phosphor- und stickstoff-haltige Katalysator (D) ausgewählt ist aus der Gruppe der Addukte von Diazabicyclo(2.2.2)octan, Dimethyldodecylamin und/oder Triethylamin mit acyclischen Phosphorsäuremonoestern und/oder mit cyclischen Phosphorsäuremonoestern und/oder mit acyclischen Phosphorsäurediestern und/oder mit cyclischen Phosphorsäurediestern,
   ii. der Katalysator (Z) ausgewählt ist aus der Gruppe der Bi(III)-salze von verzweigten C3- bis C24-Fettsäuren und
   iii. der Reaktionsbeschleuniger (R) ausgewählt ist aus der Gruppe der acyclischen Phosphorsäurediester und der cyclischen Phosphorsäurediester.

8. Beschichtungsmittelzusammensetzung nach einem der Ansprüche 1 bis 7, **dadurch gekennzeichnet, dass** die Gesamtmenge Katalysator (D) plus Katalysator (Z) plus Beschleuniger (R) zwischen 0,2 und 21 Gew.-%, bevorzugt zwischen 0,6 und 11 Gew.-%, jeweils bezogen auf den Bindemittelgehalt der Beschichtungsmittelzusammensetzung, beträgt.

9. Beschichtungsmittelzusammensetzung nach einem der Ansprüche 1 bis 8, **dadurch gekennzeichnet, dass** sie
   den Katalysator (D) in Anteilen von 0,1 bis 15 Gew.-%,
   den Katalysator (Z) in Anteilen von 0,005 bis 1,0 Gew.-% und
   ggf. den Beschleuniger (R) in Anteilen von 0,05 bis 10,0 Gew.-%, jeweils bezogen auf den Bindemittelgehalt der Beschichtungsmittelzusammensetzung, enthält.

10. Beschichtungsmittelzusammensetzung nach einem der Ansprüche 1 bis 9, **dadurch gekennzeichnet, dass** in der Komponente (B) 5 bis 75 Mol-%, bevorzugt 10 bis 60 Mol-%, besonders bevorzugt 15 bis 50 Mol-%, der ursprünglich vorhandenen Isocyanatgruppen zu Silangruppen der Formeln (I) und/oder (II), bevorzugt zu Silangruppen der Formeln (I) und (II), umgesetzt worden sind.

**11.** Beschichtungsmittelzusammensetzung nach einem der Ansprüche 1 bis 10, **dadurch gekennzeichnet, dass** in der Komponente (B) 5 bis 55 Mol-%, bevorzugt 9,8 bis 50 Mol-%, insbesondere 13,5 bis 45 Mol-%, der ursprünglich vorhandenen Isocyanatgruppen zu Silangruppen der Formel (II) umgesetzt worden sind.

**12.** Beschichtungsmittelzusammensetzung nach einem der Ansprüche 1 bis 11, **dadurch gekennzeichnet, dass** die Beschichtungsmittelzusammensetzung von 20,0 bis 80,0 Gew.-%, bevorzugt von 30,0 bis 70,0 Gew.-%, jeweils bezogen auf den Bindemittelgehalt des Beschichtungsmittel, mindestens eines hydroxylgruppenhaltigen Polyacrylates (A) und/oder mindestens eines hydroxylgruppenhaltigen Polymethacrylates (A) und/oder die Beschichtungsmittelzusammensetzung von 20,0 bis 80,0 Gew.-%, bevorzugt von 30,0 bis 70,0 Gew.-%, jeweils bezogen auf den Bindemittelgehalt der Beschichtungsmittelzusammensetzung, der Komponente (B) enthält.

**13.** Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 12 aufgebracht wird.

**14.** Mehrstufiges Beschichtungsverfahren nach Anspruch 13, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 12 bei Temperaturen zwischen 20 und 100°C, insbesondere zwischen 30 und 90°C, gehärtet wird.

**15.** Verwendung der Beschichtungsmittelzusammensetzung nach einem der Ansprüche 1 bis 12 als Klarlack beziehungsweise Verwendung des Verfahrens nach Anspruch 13 oder 14 für die Automobilserienlackierung, die Autoreparaturlackierung und/oder die Lackierung von Automobil-Anbauteilen und/oder Nutzfahrzeugen.

**16.** Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 12 hergestellt worden ist.

## Claims

**1.** Coating material composition comprising

a) at least one polyhydroxyl group-containing component (A),
b) at least one component (B) having on average at least one isocyanate group and having on average at least one hydrolyzable silane group of the formula (I)

-NR-(X-SiR"x(OR')3-x) (I),

and/or
at least one hydrolyzable silane group of the formula (II)

-N(X-SiR"x(OR')3-x)n(X'-SiR"y(OR')3-y)m (III),

where

R = hydrogen, alkyl, cycloalkyl, aryl, or aralkyl, it being possible for the carbon chain to be interrupted by nonadjacent oxygen, sulfur, or NRa groups, where Ra = alkyl, cycloalkyl, aryl, or aralkyl,
R' = hydrogen, alkyl, or cycloalkyl, it being possible for the carbon chain to be interrupted by nonadjacent oxygen, sulfur, or NRa groups with Ra = alkyl, cycloalkyl, aryl, or aralkyl, preferably R' = ethyl and/or methyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl, or aralkyl, it being possible for the carbon chain to be interrupted by nonadjacent oxygen, sulfur, or NRa groups, with Ra = alkyl, cycloalkyl, aryl, or aralkyl, preferably R" = alkyl radical, more particularly having 1 to 6 C atoms,

n = 0 to 2, m = 0 to 2, m+n = 2, and x, y = 0 to 2,
c) at least one phosphorus and nitrogen-containing catalyst (D) for the crosslinking of silane groups, and

d) at least one catalyst (Z) for the reaction of the hydroxyl groups with the isocyanate groups,

**characterized in that**

i. the catalyst (Z) is selected from the group of zinc and bismuth carboxylates, of aluminum, zirconium, titanium and/or boron chelates and/or of inorganic, tin-containing catalysts, and mixtures thereof, and
ii. the coating material composition comprises at least one reaction accelerator (R) which is selected from the group of inorganic acids and/or of organic acids and/or of partial esters of the inorganic acids and/or of partial esters of the organic acids.

**2.** Coating material composition according to Claim 1, **characterized in that** it comprises at least one component (B) having on average at least one hydrolyzable silane group of the formula (I) and at least one hydroylzable silane group of the formula (II).

**3.** Coating material composition according to Claim 1 or 2, **characterized in that** the phosphorus- and nitrogen-containing catalyst (D) is selected from the group of the amine adducts of optionally substituted acyclic phosphoric monoesters, the amine adducts of optionally substituted silic phosphoric monoesters, the amine adducts of optionally substituted acyclic phosphoric diesters, the amine adducts of optionally substituted cyclic phosphoric diesters, the amine adducts of acyclic phosphonic diesters, the amine adducts of cyclic phosphoric diesters, the amine adducts of acyclic diphosphonic diesters and/or the amine adducts of cyclic phosphonic diesters, preferably from the group of the adducts of bicyclic amines and/or of aliphatic triamines with optionally substituted acyclic phosphoric monoesters and/or with optionally substituted cyclic phosphoric monoesters and/or with optionally substituted acyclic phosphoric diesters and/or with optionally substituted cyclic phosphoric diesters.

**4.** Coating material composition according to any of Claims 1 to 3, **characterized in that** the catalyst (Z) is selected from the group of zinc and bismuth carboxylates, more particularly the Bi(III) salts of branched C3 to C24 fatty acids.

**5.** Coating material composition according to any of Claims 1 to 4, **characterized in that** the reaction accelerator (R) is selected from the group of alkylphosphonic acids, dialkylphosphinic acids, phosphonic acid, diphosphonic acid, phosphinic acid, of optionally substituted acyclic phosphonic monoesters and/or of optionally substituted cyclic phosphoric monoesters and/or of optionally substituted acyclic phosphoric diesters and/or of optionally substituted cyclic phosphoric diesters.

**6.** Coating material composition according to any of Claims 1 to 5, **characterized in that** the reaction accelerator (R) is selected from the group of optionally substituted acyclic phosphoric monoesters and/or optionally substituted cyclic phosphoric monoesters and/or optionally substituted acyclic phosphoric diesters and/or optionally substituted cyclic phosphoric diesters.

**7.** Coating material composition according to any of Claims 1 to 6, **characterized in that**

i. the phosphorus- and nitrogen-containing catalyst (D) is selected from the group of the adducts of diazabicyclo[2.2.2]octane, dimethyldodecylamine and/or triethylamine with acyclic phosphoric monoesters and/or with cyclic phosphoric monoesters and/or with acyclic phosphoric diesters and/or with cyclic phosphoric diesters,
ii. the catalyst (Z) is selected from the group of Bi(III) salts of branched C3 to C24 fatty acids, and
iii. the reaction accelerator (R) is selected from the group of acyclic phosphoric diesters and of cyclic phosphoric diesters.

**8.** Coating material composition according to any of Claims 1 to 7, **characterized in that** the total amount of catalyst (D) plus catalyst (Z) plus accelerator (R) is between 0.2 and 21 wt%, preferably between 0.6 and 11 wt%, based in each case on the binder content of the coating material composition.

**9.** Coating material composition according to any of Claims 1 to 8, **characterized in that** it comprises the catalyst (D) in fractions of 0.1 to 15 wt%,
the catalyst (Z) in fractions of 0.005 to 1.0 wt%, and
optionally the accelerator (R) in fractions of 0.05 to 10.0 wt%,
based in each case on the binder content of the coating material composition.

**10.** Coating material composition according to any of Claims 1 to 9, **characterized in that** 5 to 75 mol%, preferably 10

to 60 mol%, more preferably 15 to 50 mol% of the isocyanate groups originally present in component (B) have undergone conversion to silane groups of the formula (I) and/or (II), preferably to silane groups of the formula (I) and (II).

**11.** Coating material composition according to any of Claims 1 to 10, **characterized in that** 5 to 55 mol%, preferably 9.8 to 50 mol%, more particularly 13.5 to 45 mol% of the isocyanate groups originally present in component (B) have undergone conversion to silane groups of the formula (II).

**12.** Coating material composition according to any of Claims 1 to 11, **characterized in that** the coating material composition comprises from 20.0 to 80.0 wt%, preferably from 30.0 to 70.0 wt%, based in each case on the binder content of the coating material, of at least one hydroxyl-containing polyacrylate (A) and/or of at least one hydroxyl-containing polymethacrylate (A) and/or the coating material composition comprises from 20.0 to 80.0 wt%, preferably from 30.0 to 70.0 wt%, in each case based on the binder content of the coating material composition, of component (B).

**13.** Multistage coating process, **characterized in that** a pigmented basecoat and thereafter a coat of the coating material composition according to any of Claims 1 to 12 are applied to an optionally precoated substrate.

**14.** Multistage coating process according to Claim 13, **characterized in that** following application of the pigmented basecoat, the applied basecoat material is first dried at temperatures from room temperature to 80°C and, following the application of the coating material composition according to any of Claims 1 to 12, it is cured at temperatures between 20 and 100°C, more particularly between 30 and 90°C.

**15.** Use of the coating material composition according to any of Claims 1 to 12 as clearcoat material or use of the process according to Claim 13 or 14 for automotive OEM finishing, for automotive refinishing and/or for the finishing of parts for installation in or on automobiles, and/or of commercial vehicles.

**16.** Multicoat effect and/or color paint system composed of at least one pigmented basecoat and at least one clearcoat disposed thereon, **characterized in that** the clearcoat has been produced from a coating material composition according to any of Claims 1 to 12.

## Revendications

**1.** Composition d'agent de revêtement, contenant :

a) au moins un composant contenant des groupes polyhydroxyle (A),
b) au moins un composant (B) contenant en moyenne au moins un groupe isocyanate et contenant en moyenne au moins un groupe silane hydrolysable de formule (I)

$$-NR-(X-SiR''_x(OR')_{3-x}) \qquad (I)$$

et/ou
au moins un groupe silane hydrolysable de formule (II)

$$-N(X-SiR''_x(OR')_{3-x})_n(X'-SiR''_y(OR'')_{3-y})_m \qquad (III)$$

dans lesquelles

R = hydrogène, alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle, de préférence R' = éthyle et/ou méthyle,
X, X' = radical alkylène ou cycloalkylène linéaire et/ou ramifié de 1 à 20 atomes de carbone, de préférence X, X' = radical alkylène de 1 à 4 atomes de carbone, R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
n = 0 à 2, m = 0 à 2, m+n = 2, et x, y = 0 à 2,

c) au moins un catalyseur contenant du phosphore et de l'azote (D) pour la réticulation de groupes silane, et
d) au moins un catalyseur (Z) pour la réaction des groupes hydroxyle avec les groupes isocyanate,

**caractérisée en ce que**

i. le catalyseur (Z) est choisi dans le groupe constitué par les carboxylates de zinc et de bismuth, les chélates d'aluminium, de zirconium, de titane et/ou de bore, et/ou les catalyseurs inorganiques contenant de l'étain, ainsi que leurs mélanges, et
ii. la composition d'agent de revêtement contient au moins un accélérateur de réaction (R), qui est choisi dans le groupe constitué par les acides inorganiques et/ou les acides organiques et/ou les esters partiels des acides inorganiques et/ou les esters partiels des acides organiques.

2. Composition d'agent de revêtement selon la revendication 1, **caractérisée en ce qu'**elle contient au moins un composant (B) contenant en moyenne au moins un groupe silane hydrolysable de formule (I) et au moins un groupe silane hydrolysable de formule (II).

3. Composition d'agent de revêtement selon la revendication 1 ou 2, **caractérisée en ce que** le catalyseur contenant du phosphore et de l'azote (D) est choisi dans le groupe constitué par les adduits aminés de monoesters de l'acide phosphorique acycliques éventuellement substitués, les adduits aminés de monoesters de l'acide phosphorique cycliques éventuellement substitués, les adduits aminés de diesters de l'acide phosphorique acycliques éventuellement substitué, les adduits aminés de diesters de l'acide phosphorique cycliques éventuellement substitués, les adduits aminés de diesters de l'acide phosphonique acycliques, les adduits aminés de diesters de l'acide phosphonique cycliques, les adduits aminés de diesters de l'acide diphosphonique acycliques et/ou les adduits aminés de diesters de l'acide diphosphonique cycliques, de préférence dans le groupe constitué par les adduits d'amines bicycliques et/ou de triamines aliphatiques avec des monoesters de l'acide phosphorique acycliques éventuellement substitués et/ou avec des monoesters de l'acide phosphorique cycliques éventuellement substitués et/ou avec des diesters de l'acide phosphorique acycliques éventuellement substitués et/ou avec des diesters de l'acide phosphorique cycliques éventuellement substitués.

4. Composition d'agent de revêtement selon l'une quelconque des revendications 1 à 3, **caractérisée en ce que** le catalyseur (Z) est choisi dans le groupe constitué par les carboxylates de zinc et de bismuth, notamment les sels de Bi(III) d'acides gras en C3 à C24 ramifiés.

5. Composition d'agent de revêtement selon l'une quelconque des revendications 1 à 4, **caractérisée en ce que** l'accélérateur de réaction (R) est choisi dans le groupe constitué par les acides alkylphosphoniques, les acides dialkylphosphiniques, l'acide phosphonique, l'acide diphosphonique, l'acide phosphinique, les monoesters de l'acide phosphorique acycliques éventuellement substitués et/ou les monoesters de l'acide phosphorique cycliques éventuellement substitués et/ou les diesters de l'acide phosphorique acycliques éventuellement substitués et/ou les diesters de l'acide phosphorique cycliques éventuellement substitués.

6. Composition d'agent de revêtement selon l'une quelconque des revendications 1 à 5, **caractérisée en ce que** l'accélérateur de réaction (R) est choisi dans le groupe constitué par les monoesters de l'acide phosphorique acycliques éventuellement substitués et/ou les monoesters de l'acide phosphorique cycliques éventuellement substitués et/ou les diesters de l'acide phosphorique acycliques éventuellement substitués et/ou les diesters de l'acide phosphorique cycliques éventuellement substitués.

7. Composition d'agent de revêtement selon l'une quelconque des revendications 1 à 6, **caractérisée en ce que**

i. le catalyseur contenant du phosphore et de l'azote (D) est choisi dans le groupe constitué par les adduits de diazabicyclo(2.2.2)octane, de diméthyldodécylamine et/ou de triéthylamine avec des monoesters de l'acide phosphorique acycliques et/ou avec des monoesters de l'acide phosphorique cycliques et/ou avec des diesters de l'acide phosphorique acycliques et/ou avec des diesters de l'acide phosphorique cycliques,
ii. le catalyseur (Z) est choisi dans le groupe des sels de Bi(III) d'acides gras en C3 à C24 ramifiés, et
iii. l'accélérateur de réaction (R) est choisi dans le groupe constitué par les diesters de l'acide phosphorique acycliques et les diesters de l'acide phosphorique cycliques.

8. Composition d'agent de revêtement selon l'une quelconque des revendications 1 à 7, **caractérisée en ce que** la quantité totale de catalyseur (D) plus catalyseur (Z) plus accélérateur (R) est comprise entre 0,2 et 21 % en poids,

de préférence entre 0,6 et 11 % en poids, à chaque fois par rapport à la teneur en liant de la composition d'agent de revêtement.

**9.** Composition d'agent de revêtement selon l'une quelconque des revendications 1 à 8, **caractérisée en ce qu'**elle contient
le catalyseur (D) en proportions de 0,1 à 15 % en poids, le catalyseur (Z) en proportions de 0,005 à 1,0 % en poids et éventuellement l'accélérateur (R) en proportions de 0,05 à 10,0 % en poids,
à chaque fois par rapport à la teneur en liant de la composition d'agent de revêtement.

**10.** Composition d'agent de revêtement selon l'une quelconque des revendications 1 à 9, **caractérisée en ce que**, dans le composant (B), 5 à 75 % en moles, de préférence 10 à 60 % en moles, de manière particulièrement préférée 15 à 50 % en moles, des groupes isocyanate initialement présents ont été transformés en groupes silane des formules (I) et/ou (II), de préférence en groupes silane des formules (I) et (II).

**11.** Composition d'agent de revêtement selon l'une quelconque des revendications 1 à 10, **caractérisée en ce que**, dans le composant (B), 5 à 55 % en moles, de préférence 9,8 à 50 % en moles, notamment 13,5 à 45 % en moles, des groupes isocyanate initialement présents ont été transformés en groupes silane de formule (II).

**12.** Composition d'agent de revêtement selon l'une quelconque des revendications 1 à 11, **caractérisée en ce que** la composition d'agent de revêtement contient de 20,0 à 80,0 % en poids, de préférence de 30,0 à 70,0 % en poids, à chaque fois par rapport à la teneur en liant de l'agent de revêtement, d'au moins un polyacrylate contenant des groupes hydroxyle (A) et/ou d'au moins un polyméthacrylate contenant des groupes hydroxyle (A), et/ou la composition d'agent de revêtement contient de 20,0 à 80,0 % en poids, de préférence de 30,0 à 70,0 % en poids, à chaque fois par rapport à la teneur en liant de la composition d'agent de revêtement, du composant (B) .

**13.** Procédé de revêtement à plusieurs étapes, **caractérisé en ce qu'**une couche de vernis de base pigmentée, puis une couche de la composition d'agent de revêtement selon l'une quelconque des revendications 1 à 12 sont appliquées sur un substrat éventuellement pré-revêtu.

**14.** Procédé de revêtement à plusieurs étapes selon la revendication 13, **caractérisé en ce qu'**après l'application de la couche de vernis de base pigmentée, le vernis de base appliqué est tout d'abord séché à des températures allant de la température ambiante à 80 °C, et, après l'application de la composition d'agent de revêtement selon l'une quelconque des revendications 1 à 12, durci à des températures comprises entre 20 et 100 °C, notamment entre 30 et 90 °C.

**15.** Utilisation de la composition d'agent de revêtement selon l'une quelconque des revendications 1 à 12 en tant que vernis transparent ou utilisation du procédé selon la revendication 13 ou 14 pour le vernissage en série d'automobiles, le vernissage de réparation d'automobiles et/ou le vernissage de composants d'automobiles et/ou de véhicules utilitaires.

**16.** Vernissage multicouche à effet et/ou colorant constitué par au moins une couche de vernis de base pigmentée et au moins une couche de vernis transparent agencée sur celle-ci, **caractérisé en ce que** la couche de vernis transparent a été fabriquée à partir d'une composition d'agent de revêtement selon l'une quelconque des revendications 1 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 09077180 A
- WO 09077182 A
- WO 2014016026 A
- WO 2014077180 A
- EP 1273640 A
- WO 0109260 A
- EP 0994117 A
- WO 2014016019 A
- US 4598131 A
- DE 102005045228 A
- WO 2014048879 A
- WO 2014048854 A
- EP 2493948 B1
- WO 06042585 A
- US 4772672 A
- EP 0692007 A


### In der Beschreibung aufgeführte Nicht-Patentliteratur


- Lacke und Druckfarben. Römpp Lexikon. Georg Thieme Verlag, 1998, 250-252